# EUROPÄISCHE PATENTSCHRIFT

(11) **EP 2 146 230 B1**
(45) Veröffentlichungstag und Bekanntmachung des Hinweises auf die Patenterteilung: **12.09.2012**
(21) Anmeldenummer: 09007596.1
(22) Anmeldetag: 09.06.2009
(51) Int. Cl.: C09B 67/04, C09B 67/22, G02B 5/22

(54) **Binäre Diketopyrrolopyrrol-Pigmentzusammensetzung zur Verwendung in Colorfiltern**
Binary diketopyrrolopyrrole pigment compound for use in colour filters
Composition binaire de pigment de dikétopyrrolopyrrol destinée à l'utilisation dans des filtres colorés

(30) Priorität: 08.07.2008 DE 102008032092
(43) Veröffentlichungstag der Anmeldung: 20.01.2010
(73) Patentinhaber: Clariant Finance (BVI) Limited, Road Town, Tortola (VG)
(72) Erfinder: Reipen, Tanja, Dr., 55124 Mainz (DE); Reichwagen, Jens, Dr., 65203 Wiesbaden (DE)
(74) Vertreter: Hütter, Klaus

(56) Entgegenhaltungen:
- EP-A1- 1 411 091
- EP-A1- 1 790 698
- EP-A2- 0 224 445
- EP-A2- 1 104 789
- WO-A1-02/085987
- DE-A1- 10 235 573
- US-A- 4 659 775

## Beschreibung

Die vorliegende Erfindung betrifft eine Pigmentzusammensetzung aus Verbindungen der Formel (I) und (II), ihre Herstellung sowie die Verwendung dieses neuen Produkts als Pigment.

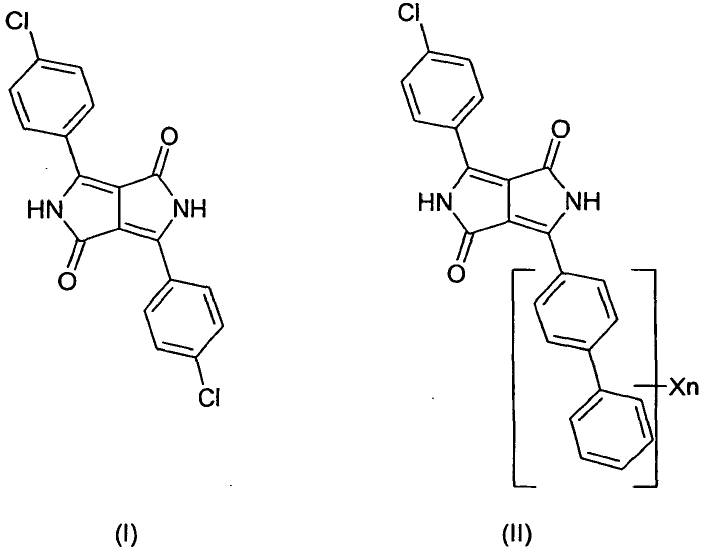

Für viele Anwendungen von organischen Pigmenten ist eine sehr gute Dispergierbarkeit und eine hohe Hitzestabilität erforderlich, wie zum Beispiel bei der Einfärbung von Metalliclacken oder der Verwendung in Farbfiltern.
Zur Herstellung von Farbfiltern werden besonders feinteilige Pigmente eingesetzt, um die Partikel-Streuung, die zu einer Herabsetzung des Kontrastverhältnisses führt, weitgehend auszuschließen.
Die kommerziell erhältlichen Handelsprodukte genügen jedoch nicht immer allen Anforderungen der Technik. Insbesondere bestand ein Verbesserungsbedarf hinsichtlich der Partikelgröße, Dispergierbarkeit und der Hitzestabilität dieser feinteiligen Pigmente ohne negativen Einfluss auf Chroma und Farbton.

Es bestand die Aufgabe, eine Diketopyrrolopyrrol-Pigmentzusammensetzung insbesondere für Farbfilteranwendungen zur Verfügung zu stellen, die sowohl eine gute Dispergierbarkeit in organischen Lacksystemen, eine Feinteiligkeit der Pigmentkristalle mit enger Teilchengrößenverteilung, eine hohe Rekristallisationsstabilität während der Zerkleinerung, eine hohe Hitzestabilität, als auch eine hohe Farbtonreinheit und Brillanz aufweist.

In der EP-A-1 411 091 wird ein aufwändiges zweistufiges Verfahren zur Darstellung feinkristalliner Pigmentpartikel beschrieben, das aus einer Kombination aus Trockenmahlung und Salzknetung besteht, um eine Rekristallisation zu größeren Teilchen wirksam zu verhindern. Gemische aus ähnlichen Diketopyrrolopyrrol-Pigmenten beschreibt auch die WO-A-02/085987, wobei deren Verwendungsmöglichkeit in Farbfiltern beiläufig erwähnt wird. Überraschenderweise wurde nun gefunden, dass ein unsymmetrisch substituiertes Diketopyrrolopyrrol (II), das zu reinem P.R. 254 gegeben wird, diese Aufgabe lösen kann.

Die vorliegende Erfindung betrifft eine binäre Pigmentzusammensetzung aus Verbindungen der Formel (I) und (II), gekennzeichnet durch eine mittlere Teilchengröße d₅₀ von 10 bis 60 nm, vorzugsweise 15 bis 50 nm, wobei weniger als 5 Volumen-% der Teilchen größer als 70 nm sind,
und wobei das Massenverhältnis von Verbindung der Formel (I) zu Verbindung der Formel (II) 99,5 zu 0,5 bis 80 zu 20, vorzugsweise 99 zu 1 bis 85 zu 15, insbesondere 98 zu 2 bis 90 zu 10 ist, 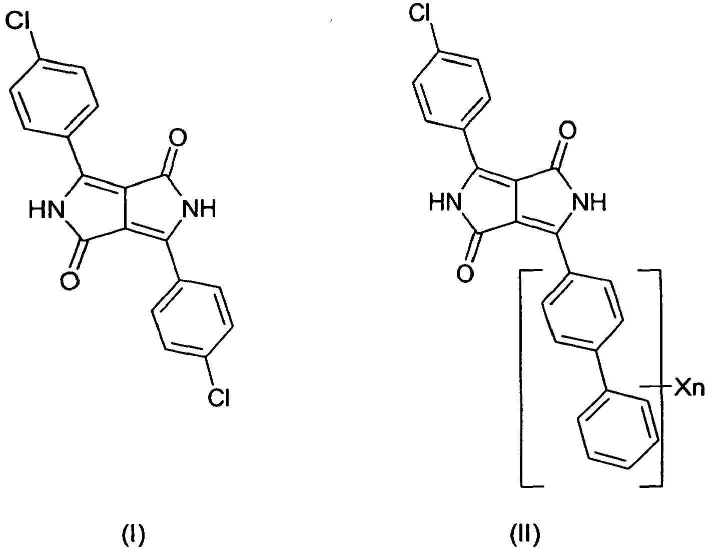 worin
- n: eine Zahl von 0 bis 4, vorzugsweise 0 bis 2, insbesondere Null, darstellt;
und
- X: OH, F, Cl, Br, CN, CF₃, Nitro, C₁-C₈-Alkyl, C₅-C₇-Cycloalkyl, C₂-C₈-Alkenyl, C₁-C₈-Alkoxy, Phenyl oder Benzyl ist.

Die Teilchengrößenverteilung der erfindungsgemäßen Pigmentzusammensetzung ist vorzugsweise einer Gauss-Verteilung angenähert, in der die Standardabweichung Sigma vorzugsweise kleiner als 30 nm, besonders bevorzugt kleiner als 20 nm, ist. In der Regel liegen die Standardabweichungen zwischen 5 und 30 nm, vorzugsweise zwischen 6 und 25 nm, insbesondere zwischen 7 und 20 nm.
Die Standardabweichung Sigma (σ) entspricht der positiven Quadratwurzel der Varianz. Die Varianz v ist die Summe der quadrierten Abweichungen vom Mittelwert dividiert durch die Zahl der Proben minus 1.
Die erfindungsgemäße Pigmentzusammensetzung ist ferner durch einen d₉₅-Wert von kleiner oder gleich 70 nm gekennzeichnet.

Das Länge- zu Breiteverhältnis der Primärpigmentteilchen der erfindungsgemäßen Pigmentzusammensetzung liegt bevorzugt zwischen 2:1 und 1:1.

Binäre Pigmentzusammensetzung bedeutet, dass, unabhängig von weiteren möglichen rheologieverbessernden Pigmentderivaten, der Diketopyrrolopyrrolpigment-Anteil als solcher nur aus den beiden Verbindungen der Formel (I) und (II) besteht. Die erfindungsgemäße binäre Pigmentzusammensetzung kann daher nicht durch eine einfache Mischsynthese mit einem entsprechenden Nitrilgemisch hergestellt werden, die üblicherweise zu einer ternären Mischung führt, sondern bedarf einer gesonderten Synthese des unsymmetrischen Diketopyrrolopyrrols der Formel (II) und anschließende Mischung mit P.R. 254.

Die Synthese von unsymmetrischen Diketopyrrolo-pyrrolen ist an sich bekannt und wird beschrieben in der EP-A1-0 184 982. Die Synthese verläuft über ein Pyrrolinon (III) als Zwischenstufe, woraus das unsymmetrische Pigment hergestellt werden kann.

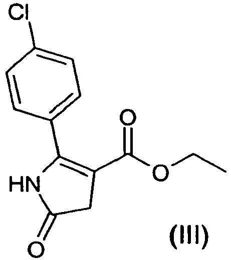

Gegenstand der vorliegenden Erfindung ist auch ein Verfahren zur Herstellung der erfindungsgemäßen binären Pigmentzusammensetzung durch Mischen von P.R. 254 mit der Verbindung der Formel (II) vor und / oder während einer Feinverteilung, vorzugsweise einer Salzknetung oder Perlmahlung, besonders bevorzugt einer Salzknetung.

Besonders überraschend ist, dass die erfindungsgemäße Pigmentzusammensetzung im Gegensatz zu reinem P.R. 254 während der Feinverteilung auch bei hohen Temperaturen rekristallisationsstabil bleibt, d. h. das sonst übliche Teilchenwachstum findet nicht statt, so dass auf die Anwesenheit eines Kristallwachstumsinhibitors verzichtet werden kann.

Für die Feinverteilung wird vorzugsweise eine Salzknetung mit einem kristallinen anorganischen Salz in Gegenwart eines organischen Lösemittels durchgeführt. Als kristallines anorganisches Salz kommen beispielsweise Aluminiumsulfat, Natriumsulfat, Calciumchlorid, Kaliumchlorid oder Natriumchlorid in Betracht, bevorzugt Natriumsulfat, Natriumchlorid und Kaliumchlorid.
Als organisches Lösemittel kommen beispielsweise Ketone, Ester, Amide, Sulfone, Sulfoxide, Nitroverbindungen, Mono-, Bis- oder Tris-hydroxy-C₂-C₁₂-alkane, die mit C₁-C₈-alkyl und einer oder mehreren Hydroxygruppen substituiert sein können, in Betracht. Besonders bevorzugt sind mit Wasser mischbare hochsiedende organische Lösemittel auf Basis von monomeren, oligomeren und polymeren C₂-C₃-Alkylenglykolen, wie z. B. Diethylenglykol, Diethylenglykolmonomethyl- und ethylether, Triethylenglykol, Triethylenglykolmonomethyl- und ethylether, Dipropylenglykol, Dipropylenglykolmonomethyl- und -ethylether, Propylenglykolmonomethyl- und -ethylether und flüssige Polyethylen- und Polypropylenglykole, N-Methylpyrrolidon sowie weiterhin Triacetin, Dimethylformamid, Dimethylacetamid, Ethyl-methyl-keton, Cyclohexanon, Diacetonalkohol, Butylacetat, Nitromethan, Dimethylsulfoxid und Sulfolan.
Das Gewichtsverhältnis zwischen dem anorganischen Salz und dem Pigment beträgt bevorzugt (2 bis 10) zu 1, insbesondere (3 bis 7) zu 1.
Das Gewichtsverhältnis zwischen dem organischen Lösemittel und dem anorganischen Salz beträgt bevorzugt (1 ml : 10 g) bis (2 ml : 7 g).
Das Gewichtsverhältnis zwischen dem organischen Lösemittel und der Summe aus anorganischem Salz und Pigment beträgt bevorzugt (1 ml : 2 g) bis (1 ml : 10 g).

Die Temperatur während der Knetung kann zwischen 40 und 140 °C, vorzugsweise 60 bis 120 °C, betragen. Die Knetdauer beträgt zweckmäßigerweise 4 h bis 32 h, bevorzugt 8 h bis 20 h.
Nach der Salzknetung wird das anorganische Salz und das organische Lösemittel zweckmäßigerweise durch Waschen mit Wasser entfernt und die so erhaltene Pigmentkomposition nach üblichen Verfahren getrocknet.

Das nach der erfindungsgemäßen Feinverteilung erhaltene Material kann als Suspension, Filterkuchen oder trockenes Material gegebenenfalls einer Lösungsmittelnachbehandlung unterzogen werden, um eine homogenere Teilchenform zu erhalten, ohne die Teilchengröße merklich zu erhöhen. Bevorzugt ist die Verwendung von Wasser oder wasserdampfflüchtigen Lösungsmitteln wie Alkoholen und aromatischen Lösungsmitteln, besonders bevorzugt verzweigte oder unverzweigte C₁-C₆ -Alkohole, Toluol, Xylol, Chlorbenzol, Dichlorbenzol, Nitrotoluol oder Nitrobenzol meist unter erhöhter Temperatur, beispielsweise bis 200 °C, und gegebenenfalls unter erhöhtem Druck.

Die erfindungsgemäße Pigmentzusammensetzung kann noch weitere übliche Hilfsmittel oder Zusatzstoffe enthalten, wie beispielsweise Tenside, Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren, vorzugsweise in einer Menge von 0,1 bis 30 Gew.-%, insbesondere 1 bis 25 Gew.-%, bezogen auf die eingesetzte Mischung der Verbindungen der Formeln (I) und (II).
Als Tenside kommen übliche anionische, kationische, nichtionische oder amphotere Substanzen oder Mischungen dieser Mittel in Betracht.

Besonders bevorzugt sind Pigmentzusammensetzungen enthaltend 0,1 bis 30 Gew.-%, insbesondere 1 bis 25 Gew.-%, bezogen auf die eingesetzte Mischung der Verbindungen der Formeln (I) und (II), eines oder mehrerer Dispergatoren aus der Gruppe der Verbindungen der Formel (4) und/oder der unverlackten, sulfogruppenhaltigen Monoazofarbstoffe, 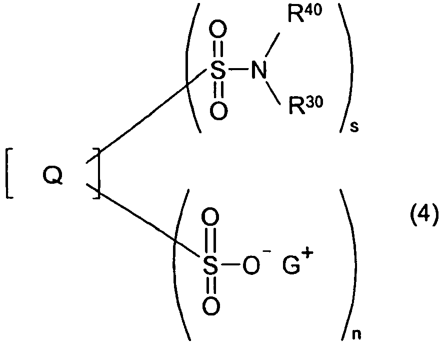 worin
- Q: ein Rest eines organischen Pigments aus der Gruppe der Perinon-, Chinacridon-, Chinacridonchinon-, Anthanthron-, Indanthron-, Dioxazin-, wie beispielsweise Triphendioxazine, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
- s: eine Zahl von 1 bis 5, vorzugsweise 1 bis 3, darstellt;
- n: eine Zahl von 0 bis 4, vorzugsweise 0,1 bis 2, darstellt; wobei die Summe von s und n 1 bis 5 beträgt und s größer als n ist;
- R³⁰: einen verzweigten oder unverzweigten, gesättigten oder ungesättigten, aliphatischen Kohlenwasserstoffrest mit 1 bis 20 C-Atomen, oder einen C₅-C₇-Cycloalkylrest, oder einen araliphatischen oder aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkyl-, Aromaten-, Araliphaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR⁵, CONR⁵R⁶, NR⁵R⁶ SO₃R⁵, SO₂-NR⁵R⁶, SO₃⁻E⁺ oder COO⁻E⁺ substituiert sein können, wobei R⁵ und R⁶ gleich oder verschieden sind und Wasserstoff, Phenyl oder C₁-C₆-Alkyl bedeuten;
- R⁴⁰: Wasserstoff oder R³⁰ bedeutet;
- E⁺, G⁺: unabhängig voneinander H⁺ oder das Äquivalent M^{p+}/m eines Metallkations M^{p+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 und p die Zahl 1, 2 oder 3 bedeutet;
oder ein substituiertes oder unsubstituiertes Ammoniumion bezeichnet.

In bevorzugten Pigmeritdispergatoren der Formel (4) bedeuten
- Q: ein Rest eines organischen Pigments aus der Gruppe der Chinacridon-, Dioxazin- oder Diketopyrrolopyrrol-Pigmente;
- R³⁰: C₁-C₆-Alkyl, Benzyl, Phenyl, die jeweils durch 1, 2, 3 oder 4 Substituenten aus der Gruppe OH, C₁-C₆-Alkoxy, S-C₁-C₆-Alkyl, NHCONH₂, NHC(NH)NH₂, NHCO-C₁-C₆-Alkyl, C₁-C₆-Alkyl, CONR⁵R⁶, NR⁵R⁶ substituiert sein können, wobei R⁵ und R⁶ gleich oder verschieden sind und Wasserstoff, Phenyl oder C₁-C₆-Alkyl bedeuten;
- R⁴⁰: Wasserstoff,
- G⁺: Wasserstoff, ein Alkalimetall oder ein Ammoniumion.

In besonders bevorzugten Pigmentdispergatoren der Formel (4) bedeuten
- Q: ein Rest eines organischen Pigments aus der Gruppe der Diketopyrrolopyrrol-Pigmente, bevorzugt C.I. Pigment Red 255 oder 264, oder der Chinacridon-Pigmente, bevorzugt C.I. Pigment Violet 19 oder Pigment Red 122;
- R³⁰: C₁-C₆-Alkyl, das durch NR⁵R⁶ substituiert ist, wobei R⁵ und R⁶ gleich oder verschieden sind und Wasserstoff, Phenyl oder C₁-C₆-Alkyl bedeuten;
- R⁴⁰: Wasserstoff,
- G⁺: Wasserstoff, Li, Na, K oder ein Ammoniumion.

Die Pigmentdispergatoren der Formel (4) sind an sich bekannte Verbindungen und lassen sich nach bekannten Verfahren herstellen, z. B. nach EP-A-1 104 789 oder DE-A- 3 106 906.

Bei den unverlackten, sulfogruppenhaltigen Monoazofarbstoffen handelt es sich bevorzugt um Verbindungen der Formel (Va), (Vb), (VI) oder (VII) 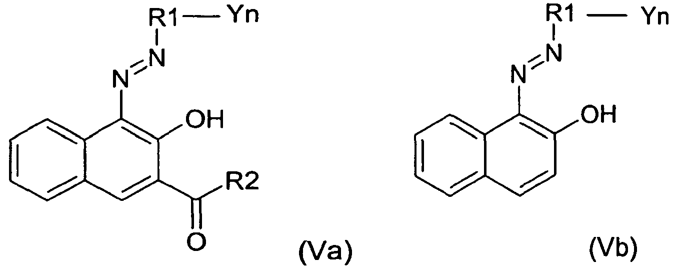 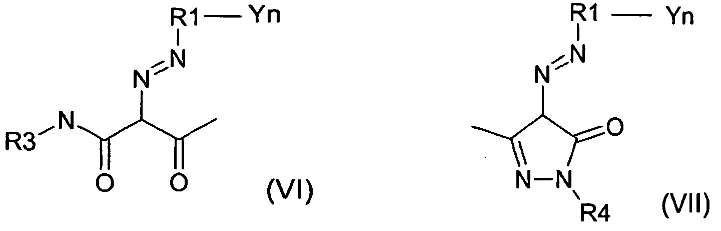 worin
- R1: ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;
wobei die genannten Aromaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR5, CONR5R6, NR5R6, SO₃R5, SO₂-NR5R6 oder COO⁻E⁺ substituiert sein können, wobei R5 und R6 gleich oder verschieden sind und Wasserstoff, Phenyl oder C₁-C₆-Alkyl und E⁺ Wasserstoff, Lithium, Natrium, Kalium, Rubidium, Cäsium oder ein unsubstituiertes Ammoniumion bedeuten;
- Y: SO₃⁻E⁺ oder Z-SO₃⁻E⁺, wobei Z C₁ - C₁₀-Alkylen oder Phenylen bedeutet;
- n: die Zahl 1, 2 oder 3;
- R2: -OR⁸ oder -NHR⁸,
wobei R⁸ H, C₁-C₆-Alkyl, Benzyl, ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;
wobei die genannten Aromaten- und Heteroaromaten-Reste jeweils durch 1, 2, 3 oder 4 Substituenten aus der Gruppe OH, C₁-C₆-Alkoxy, S-C₁-C₆-Alkyl, Halogen, wie F, Cl, Br, NHCONH₂, NHC(NH)NH₂, NHCO-C₁-C₆-Alkyl, C₁-C₆-Alkyl, Nitro, COOR5, CONR5R6, SO₃R5, SO₂-NR5R6, NR⁹R¹⁰, SO₃⁻E⁺ oder COO⁻E⁺ substituiert sein können, wobei R5 und R6 gleich oder verschieden sind und Wasserstoff, Phenyl oder C₁-C₆-Alkyl bedeuten; R⁹ und R¹⁰ gleich oder verschieden sind und Wasserstoff, Phenyl oder C₁-C₆-Alkyl bedeuten;
- R3 und R4: jeweils ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;
wobei die genannten Aromaten- und Heteroaromaten-Reste jeweils durch 1, 2, 3 oder 4 Substituenten aus der Gruppe OH, C₁-C₆-Alkoxy, S-C₁-C₆-Alkyl, Halogen, wie F, Cl, Br, NHCONH₂, NHC(NH)NH₂, NHCO-C₁-C₆-Alkyl, C₁-C₆-Alkyl, Nitro, COOR5, CONR5R6, SO₃R5, SO₂-NR5R6, NR⁹R¹⁰, SO₃⁻E⁺ oder COO⁻E⁺ substituiert sein können, wobei R5 und R6 gleich oder verschieden sind und Wasserstoff, Phenyl oder C₁-C₆-Alkyl bedeuten; R⁹ und R¹⁰ gleich oder verschieden sind und Wasserstoff, Phenyl oder C₁-C₆-Alkyl bedeuten.

In den Monoazofarbstoffen hat der Rest - R1 - Yn folgende bevorzugte Bedeutungen, wobei die freie Valenz am Phenylring oder Naphthylring die Bindung zur Diazo-Gruppe darstellt:
(i) aus der Gruppe der *p*-Amino-Benzolsulfonsäuren: 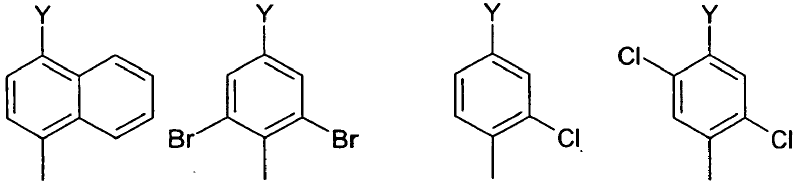 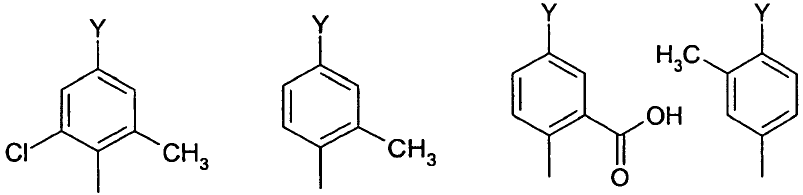 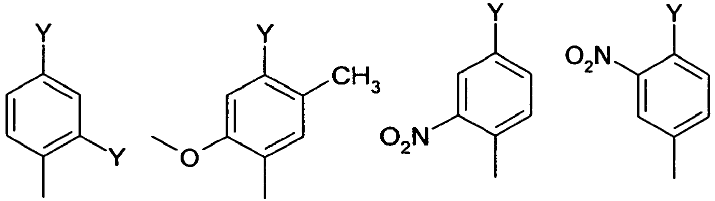 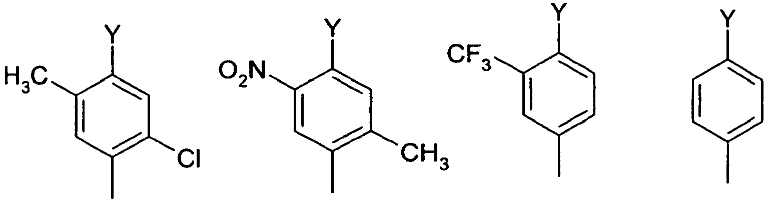 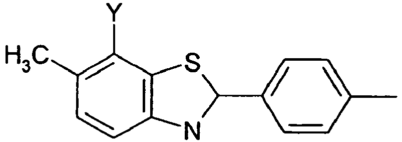
(ii) aus der Gruppe der *m*-Amino-Benzolsulfonsäuren: 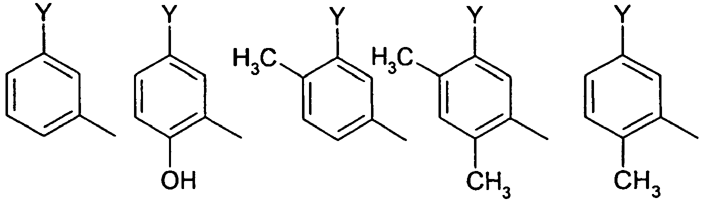 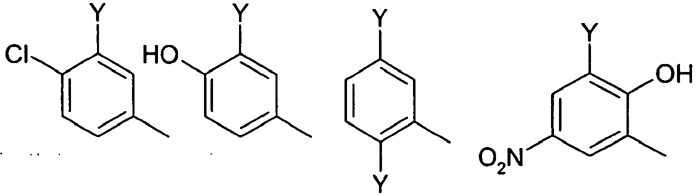 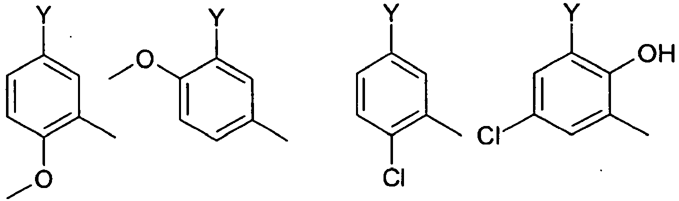 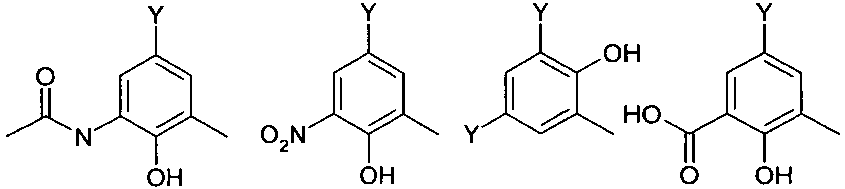 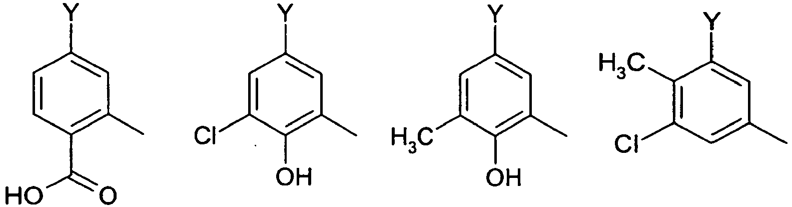 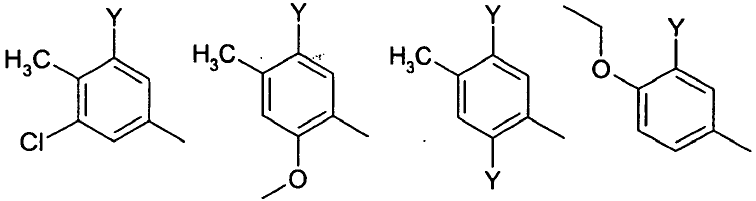 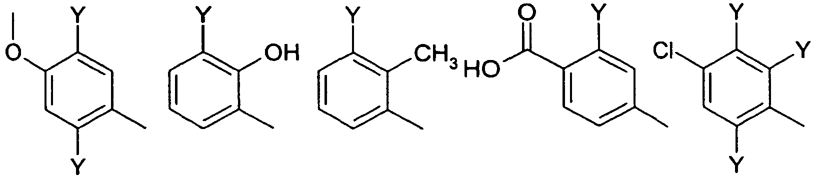
(iii) aus der Gruppe der *o*-Amino-Benzolsulfonsäuren:

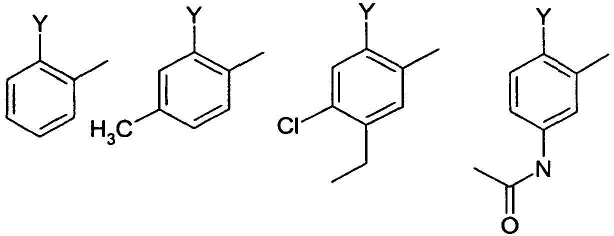

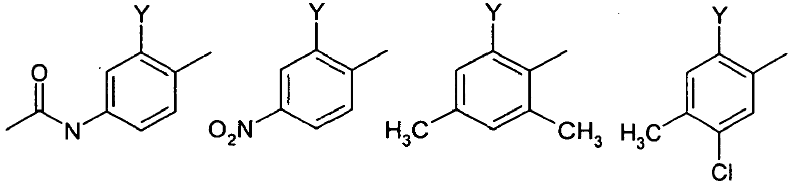

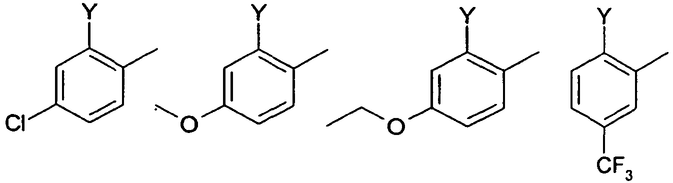

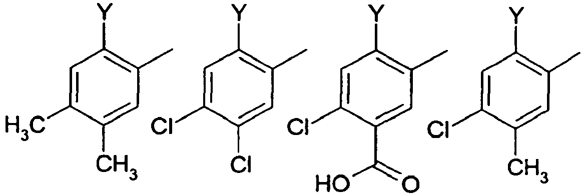

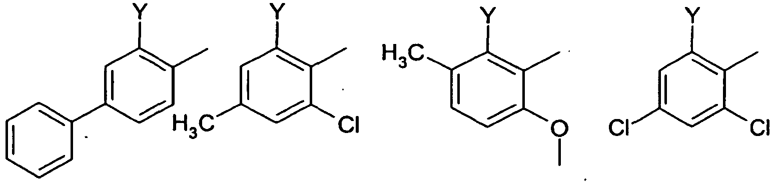

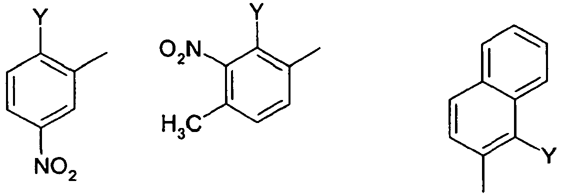

Besonders bevorzugte Reste aus der Gruppe - R1 - Yn sind:

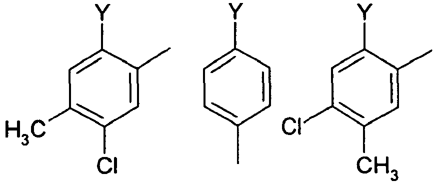

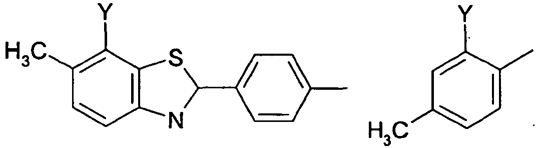

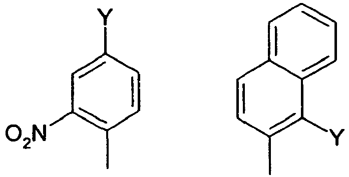

Bevorzugte Verbindungen der Formel (Va) im Sinne der Erfindung:
In einer ersten Ausführungsform hat der Rest -R2 die Bedeutung OH oder O-C₁-C₆-Alkyl.
In einer alternativen Ausführungsform bedeutet der Rest -CO-R2 eine Amidgruppe mit R2 gleich NH₂, 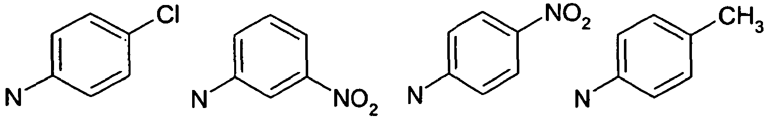 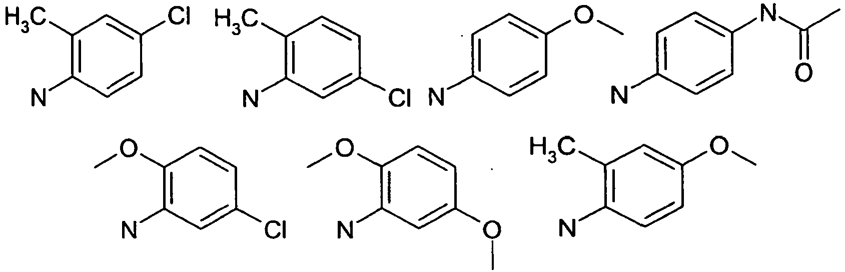 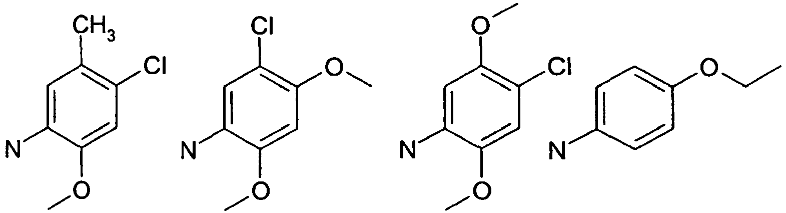 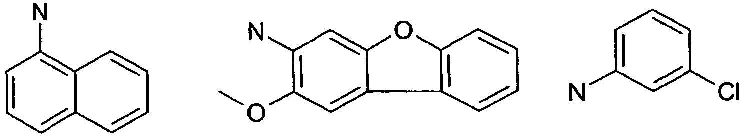 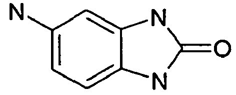 wobei in den vorstehenden Formeln die Bindung zur Carbonylgruppe über die freie Aminogruppe (N -) des Aromatenringes erfolgt.
Besonders bevorzugte Reste aus der Gruppe - R2 sind:
OH einerseits, sowie

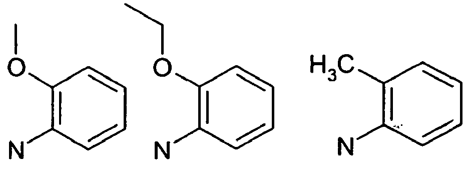

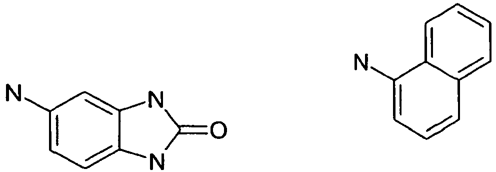

Bevorzugte Verbindungen der Formel (VI) im Sinne der Erfindung sind solche mit folgenden Resten -R3, wobei die freie Valenz am Phenylring die Bindung zum Stickstoff darstellt:

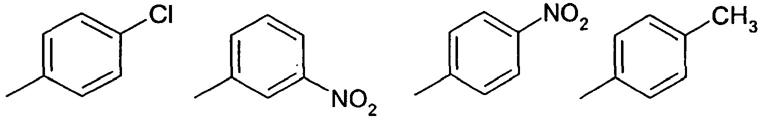

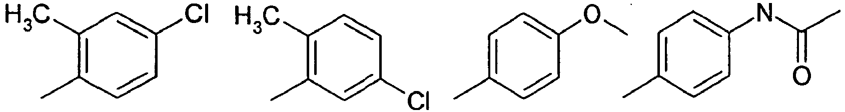

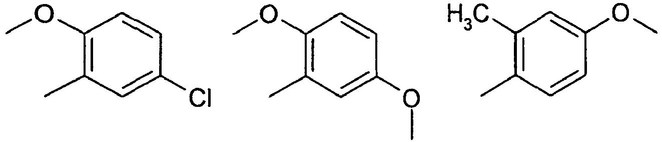

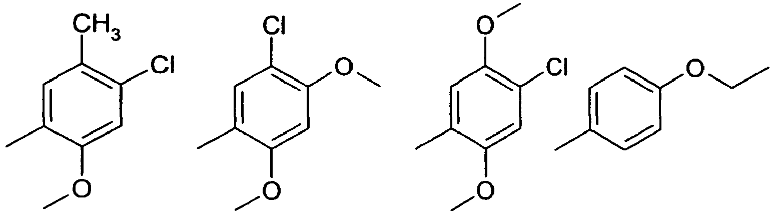

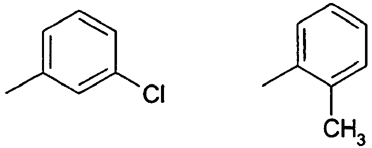

Besonders bevorzugte Reste aus der Gruppe - R3 sind:

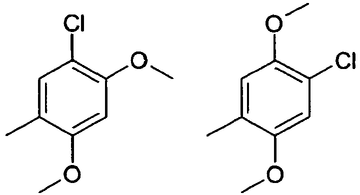

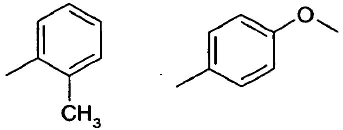

Bevorzugte Verbindungen der Formel (VII) im Sinne der Erfindung sind solche mit folgenden Resten - R4, wobei die freie Valenz am Phenylring die Bindung zum Stickstoff darstellt:

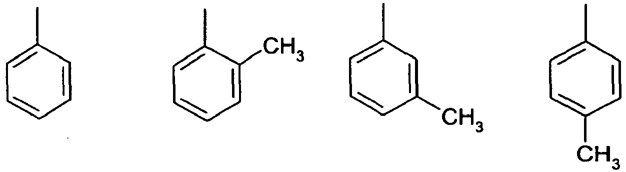

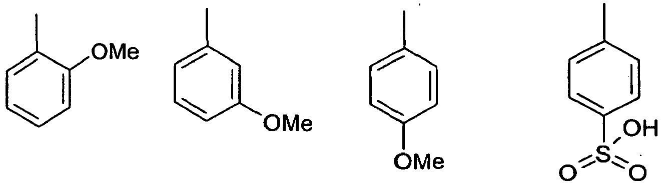

Besonders bevorzugte Reste aus der Gruppe - R4 sind

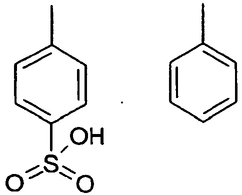

Ganz besonders bevorzugt sind die Monoazo-Farbstoffe der Formeln:

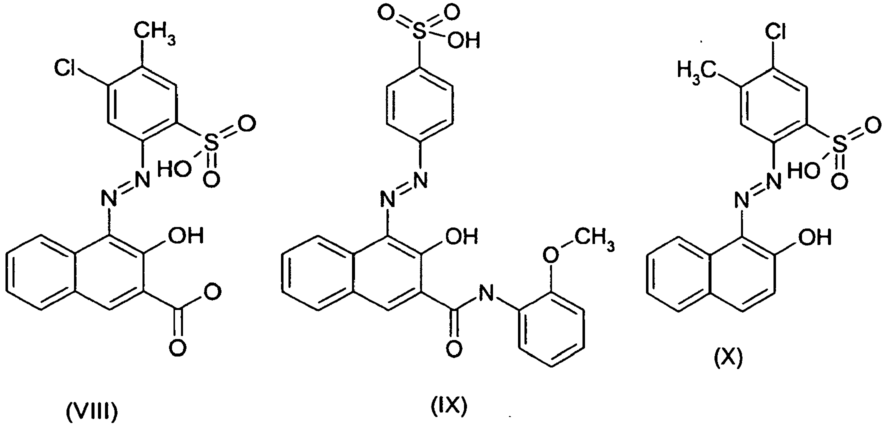

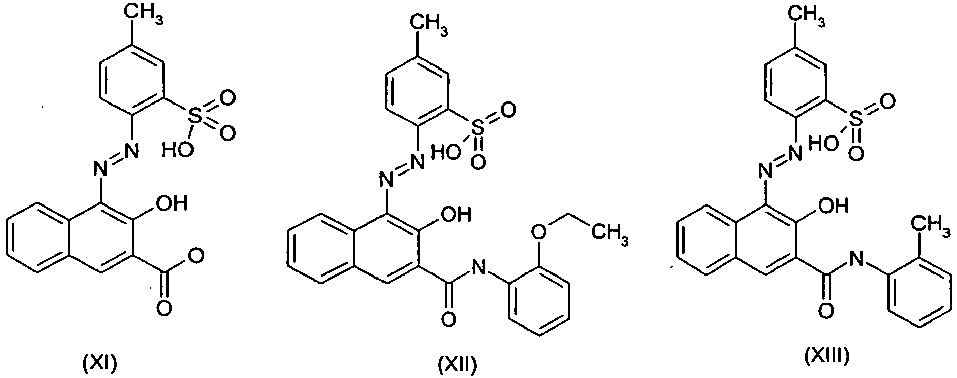

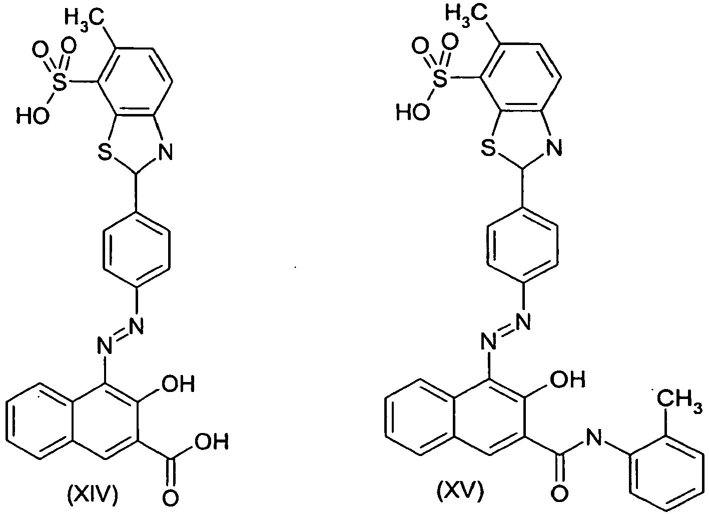

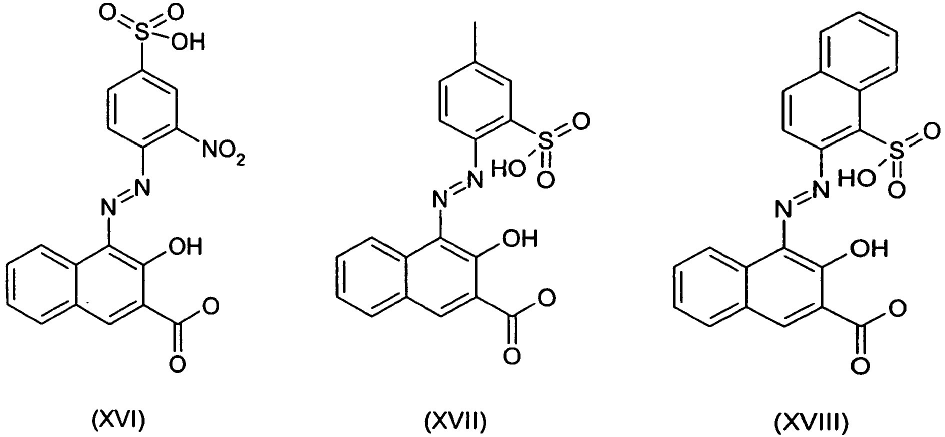

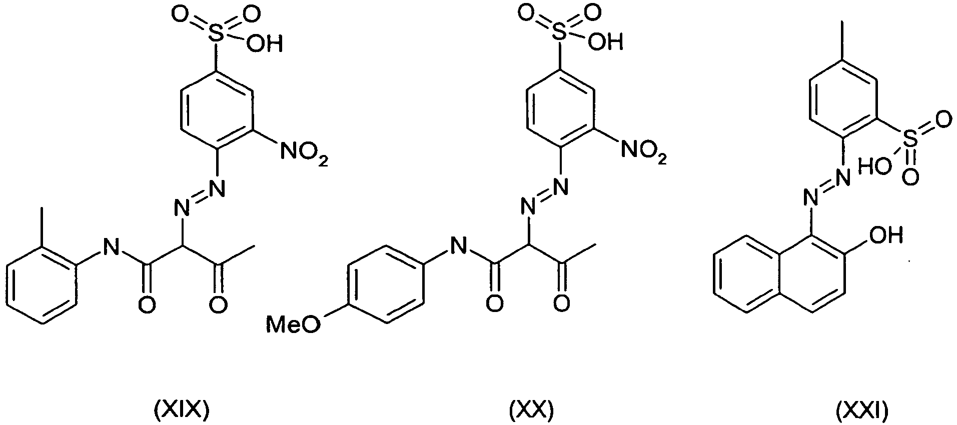

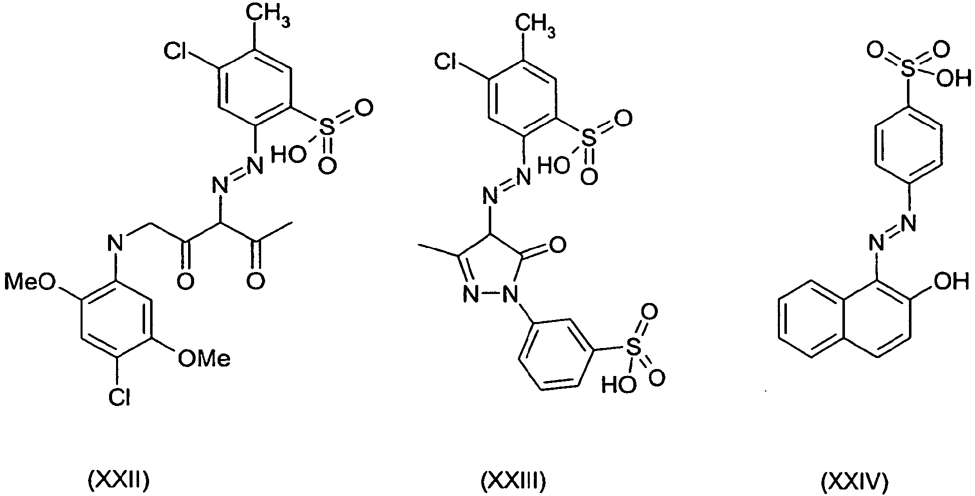

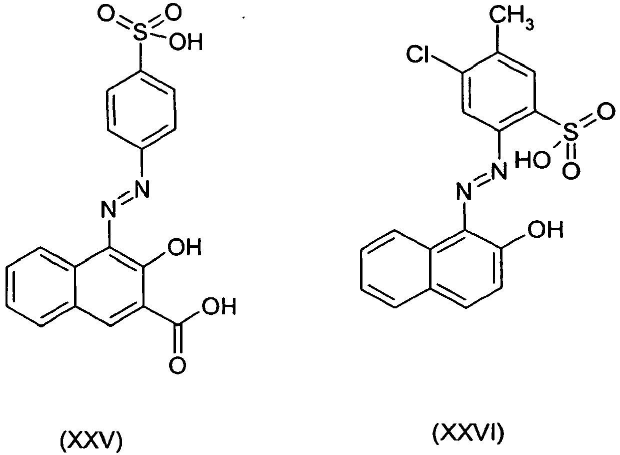

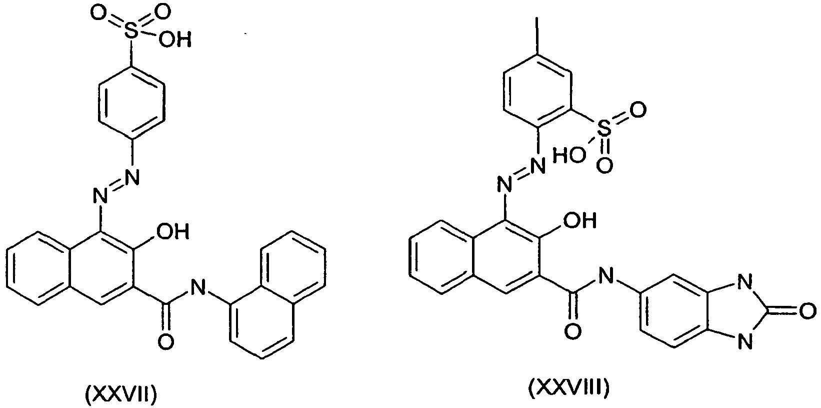

Die unverlackten, sulfogruppenhaltigen Monoazofarbstoffe sind an sich bekannte Verbindungen und lassen sich nach bekannten Verfahren durch Diazotierung und Azokupplung herstellen.

Der Anteil der Pigmentdispergatoren der Formel (4) ist vorzugsweise zwischen 0 und 30 Gew.-%, besonders bevorzugt zwischen 1 und 25 Gew.-%, bezogen auf die eingesetzte Mischung der Verbindungen der Formeln (I) und (II).

Der Anteil des Monoazofarbstoffes ist vorzugsweise zwischen 0 und 30 Gew.-%, besonders bevorzugt zwischen 1 und 25 Gew.-%, bezogen auf die eingesetzte Mischung der Verbindungen der Formeln (I) und (II).

Das Gewichtsverhältnis der Pigmentdispergatoren der Formel (4) und der Monoazofarbstoffe zueinander ist vorzugsweise etwa 1: 1, d.h. 1 zu 0,8 bis 1,2.

Gegenstand der Erfindung ist auch ein Verfahren zur Herstellung der erfindungsgemäßen Pigmentzusammensetzung, **dadurch gekennzeichnet, dass** man die Mischung der Verbindungen der Formeln (I) und (II) vor, während und/oder nach einer Feinverteilung oder Finishbehandlung mit einem oder mehreren der Pigmentdispergatoren der Formeln (4) bzw. der unverlackten, sulfogruppenhaltigen Monoazofarbstoffe versetzt.

Die erfindungsgemäßen Pigmentzusammensetzungen lassen sich prinzipiell zum Pigmentieren von allen hochmolekularen organischen Materialien natürlicher oder synthetischer Herkunft einsetzen, beispielsweise von Kunststoffen, Harzen, Lacken, insbesondere Metallic-Lacken, Anstrichfarben, elektrophotographischen Tonern und Entwicklern, Elektretmaterialien, Farbfiltern sowie von Tinten, Druckfarben.

Insbesondere lassen sich mit den erfindungsgemäßen Pigmentzusammensetzungen Farbtöne im roten Bereich erzielen, die beim Einsatz in Farbfiltern gefragt sind. Hier sorgen sie für hohen Kontrast und genügen auch den sonstigen, beim Einsatz in Farbfiltern gestellten Anforderungen, wie hohe Temperaturstabilität oder steile und schmale Absorptionsbanden.
Insbesondere sind die erfindungsgemäßen Pigmentzusammensetzungen auch als Farbmittel in Ink-Jet Tinten auf wässriger und nichtwässriger Basis sowie in solchen Tinten, die nach dem Hot-melt-Verfahren arbeiten, geeignet.

Gegenstand der vorliegenden Erfindung ist daher auch ein hochmolekulares organisches Material, enthaltend eine färberisch wirksame Menge einer erfindungsgemäßen Pigmentzubereitung.
Bezogen auf das zu pigmentierende, hochmolekulare organische Material setzt man die erfindungsgemäße Pigmentzusammensetzung meist in einer Menge von 0,01 bis 30 Gew.-%, vorzugsweise 0,1 bis 15 Gew.-%, ein. Bei dem Einsatz in Farbfiltern können auch höhere Mengen eingesetzt werden, wie nachstehend erwähnt.

Insbesondere sind die erfindungsgemäßen Pigmentzusammensetzungen als Farbmittel für Farbfilter sowohl für die additive wie auch für die subtraktive Farberzeugung geeignet, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder lightemitting diodes sein können, sowie als Farbmittel für elektronische Tinten ("electronic inks" bzw. "e-inks") oder "electronic paper" ("e-paper").

Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z. B. TFT-LCD = Thin Film Transistor Liquid Crystal Displays oder z. B. ((S) TN-LCD = (Super) Twisted Nematic-LCD) aufgebracht. Neben einer hohen Thermostabilität ist für eine stabile Paste bzw. einen pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die Rotfarbtöne der erfindungsgemäßen Pigmentzusammensetzungen sind ganz besonders gut geeignet für den Color Filter Farbset Rot-Grün-Blau (R,G,B). Diese drei Farben liegen als getrennte Farbpunkte nebeneinander vor, und ergeben von hinten durchleuchtet ein Vollfarbbild.
Typische Farbmittel für den blauen Farbpunkt sind Phthalocyaninfarbmittel oder Benzimidazolondioxazinpigmente wie z. B. C.I. Pigment Blue 15:6 und C.I.
Pigment Blue 80. Für den grünen Farbpunkt werden typischerweise Phthalocyaninfarbmittel eingesetzt, wie z. B. C.I. Pigment Green 36 und C.I. Pigment Green 7.
Bei Bedarf können den jeweiligen Farbpunkten noch weitere Farben zum Nuancieren zugemischt werden. Für den Rot- und Grünfarbton wird bevorzugt mit Gelb abgemischt, zum Beispiel mit C.I. Pigment Yellow 138,139,150,151,180 und 213. Für den Blau Farbton wird bevorzugt mit Violet abgemischt, z. B. mit C.I. Pigment Violet 19 oder 23.

Die Einsatzkonzentration der erfindungsgemäßen Pigmentzusammensetzungen im aufgebrachten Color Filter-Film kann zwischen 5 und 95 Gew.-%, bevorzugt zwischen 20 und 80 Gew.-%, ganz besonders bevorzugt zwischen 40 und 60 Gew.-%, liegen, bezogen auf das Gesamtgewicht des Color Filter-Filmes. Gegenstand der Erfindung ist auch ein Colorfilter, enthaltend eine färberisch wirksame Menge der erfindungsgemäßen Pigmentzusammensetzung.

In den folgenden Beispielen bedeuten Prozentangaben Gewichtsprozente und Teile Gewichtsteile, sofern nicht anders angegeben.

Herstellung des unsymmetrischen DPP (29):

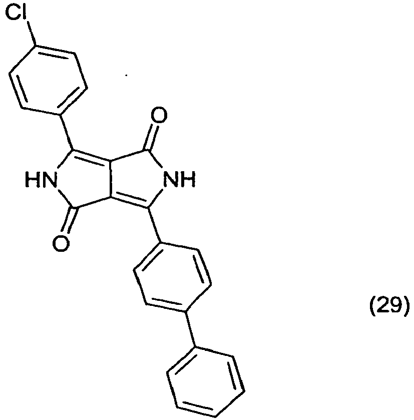

3-(4-Chlorphenyl)-3-oxo-propionsäureethylester (30) (Natriumsalz) In 800 ml trockenes Toluol werden 155 g 4-Chloracetophenon eingetragen. Zu der klaren Lösung werden 236 g Diethylcarbonat in 20 Minuten zugetropft. Anschließend werden vorsichtig 42 g Natriumhydrid (60 %ig) zugegeben. Die Mischung wird auf 78 °C erwärmt und das entstandene Ethanol abdestilliert.

Nach vollständiger Entfernung des Ethanols aus der Reaktionsmischung wird die gelbe Suspension mit einem Eisbad abgekühlt, der gelbe Rückstand abfiltriert, mit 500 ml Toluol gewaschen und im Vakuum getrocknet.
Man erhält 137 g 3-(4-Chlorphenyl)-3-oxo-propionsäureethylester (30) (Natriumsalz).

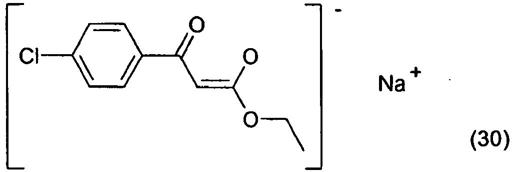

2-(4-Chlorbenzoyl)-bernsteinsäurediethylester (31)
Das Natriumsalz des 3-(4-Chlorphenyl)-3-oxo-propionsäureethylesters (30) (42,3 g) wird in kleinen Portionen vorsichtig in 29,8 g Bromessigsäureethylester eingetragen. Das Gemisch wird bei 65 °C gehalten, bis die Reaktion laut DC-Kontrolle vollständig ist.

Nach dem Abkühlen wird die Mischung portionsweise mit 600 ml Wasser versetzt und in einen Scheidetrichter überführt.
Es wird insgesamt dreimal mit jeweils 200 ml Ether extrahiert. Die Phasen werden getrennt und die vereinigten organischen Phasen mit Magnesiumsulfat getrocknet. Der Ether wird entfernt und der Rückstand im Vakuum bei 80 °C getrocknet. Man erhält 39,9 g 2-(4-Chlorbenzoyl)-bernsteinsäurediethylester (31).

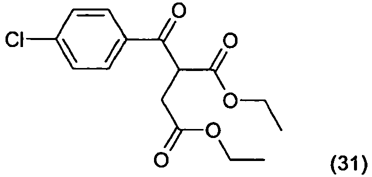

2-(4-Chlorphenyl)-5-oxo-4,5-dihydro-1H-pyrrol-3-carbonsäureethylester (3)
In 70 ml Eisessig werden 16,0 g 2-(4-Chlorbenzoyl)-bernsteinsäurediethylester (31) eingetragen. Dazu werden 36,4 g Ammoniumacetat gegeben und die Mischung 2,5 h gerührt. Nach dem Erhitzen auf Siedetemperatur wird die Suspension für weitere 1,5 h gerührt und anschließend langsam auf 5 °C angekühlt. Der kristalline, silbrig-graue Rückstand wird isoliert, mit Eisessig und mit Wasser gewaschen und anschließend im Vakuum bei 80 °C getrocknet (12,8 g).

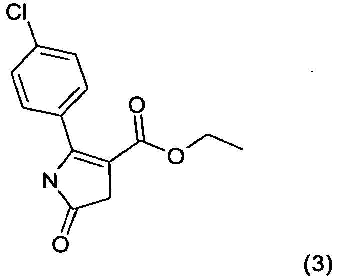

Aus dem Pyrrolinon (3) wird das unsymmetrische Pigment (29) hergestellt.
Dafür werden 125 tert.-Amylalkohol vorgelegt, 5,2 g Natrium eingetragen und die Mischung bis zur vollständigen Lösung des Natriums zum Sieden erhitzt. Anschließend werden bei 95 °C 13,4 g 4-Cyanobiphenyl zugegeben. Zu der hellen Suspension werden 19,9 g 2-(4-Chlorphenyl)-5-oxo-4,5-dihydro-1H-pyrrol-3-carbonsäureethylester (3) in Portionen eingetragen, und die dunkelrote Suspension für 90 Minuten bei 100 °C gerührt.
Nach beendeter Reaktion wird die Mischung auf 80°C abgekühlt und auf 330 ml Wasser (60 °C) gefällt. Zur Hydrolyse wird das Pigment für 30 Minuten bei 75 °C gerührt. Der tert.-Amylalkohol wird durch eine Wasserdampfdestillation entfernt, und die wässrige Pigmentsuspension anschließend filtriert. Das rote Pigment wird mit Methanol und Wasser gewaschen und im Vakuum bei 80 °C getrocknet (24,0 g).

Herstellung der unverlackten, sulfogruppenhaltigen Monoazofarbstoffe:

### Beispiel A: Verbindung (VIII)

### a) Diazo (Mischung 1):

89,6 Teile 2-Amino-4-chlor-5-methylbenzolsulfonsäure werden in 400 Teilen Wasser und 41 Teilen Natronlauge (w = 33 %) gelöst. Es wird mit 162 Teilen Salzsäure (w = 31 %) und 73 Teilen Natriumnitritlösung (w=40%) bei 10 °C diazotiert. Anschließend wird durch Zugabe von 50 Teilen Natriumacetat ein pH von 3-4 eingestellt.

### b) Kuppler (Mischung 2):

In 1600 Teilen Wasser und 98 Teilen Natronlauge 33 %ig werden 79 Teile BONS (3-Hydroxy-naphthalin-2-carbonsäure) gelöst. Durch Zugabe von Eis wird auf 10 °C abgekühlt.

### c) Kupplung:

Mischung 1 wird in 90 Minuten bei 15 °C zu Mischung 2 gegeben. Es wird erst eine Stunde bei 30 °C, dann eine Stunde bei 60 °C gerührt. Die entstehende tiefrote Suspension wird filtriert, gewaschen und bei 80 °C im Umlufttrockenschrank getrocknet. Man erhält 160 Teile des Verbindung (VIII).

### Beispiele B bis U

Analog Beispiel A werden die Verbindungen (IX) bis (XXVIII) hergestellt.

### Beispiel 1:

Es wird eine Salzknetung durchgeführt, bei der P.R. 254 mit einer mittleren Teilchengröße von über 200 nm eingesetzt wird, das in Anlehnung an Beispiel 1 der EP-A-0 190 999 hergestellt wurde. Dafür werden 15 g des trockenen Pigments P.R. 254 und 0,6 g des unsymmetrischen DPP-Pigments der Formel (29) zusammen mit 90 g Natriumchlorid und 25 ml Diethylenglykol bei einer Temperatur von 80 °C für 12 h geknetet. Der Knetteig wird in 0,9 I 5 gew.-%iger Salzsäure für zwei Stunden gerührt und das Pigment anschließend abfiltriert. Der Filterkuchen wird erneut für 1 h unter Rühren mit 0,9 I entsalztem Wasser behandelt. Nach der Filtration wird das Pigment mit Wasser salz- und säurefrei gewaschen und im Vakuum getrocknet.

Die erhaltene Pigmentzusammensetzung hat eine mittlere Teilchengröße d₅₀ = 30 nm und einen d₉₅-Wert von 45 nm mit einer Standardabweichung σ von 11 nm.
Länge zu Breiteverhältnis: 1.5:1

### Beispiel 2:

Es wird eine Salzknetung analog zu Beispiel 1 durchgeführt, wobei jedoch 1,2 g des unsymmetrischen DPP-Pigments der Formel (29) eingesetzt werden.
Die erhaltene Pigmentzusammensetzung hat eine mittlere Teilchengröße
d₅₀ = 28 nm und einen d₉₅-Wert von 42 nm mit einer Standardabweichung σ von 8 nm.
Länge zu Breiteverhältnis: 1.5:

### Beispiel 3:

Es wird eine Salzknetung durchgeführt, bei der P.R. 254 mit einer mittleren Teilchengröße von über 200 nm eingesetzt wird, das in Anlehnung an Beispiel 1 der EP-A-0 190 999 hergestellt wurde. Dafür werden 14 g des trockenen Pigments P.R. 254, 0,56 g des unsymmetrischen DPP-Pigments der Formel (29), 84 g Natriumchlorid und 25 ml Diethylenglykol bei einer Temperatur von 80 °C geknetet, bis ein homogener Knetteig entstanden ist.
Es wird eine homogene Mischung aus 1,4 g des Pigmentdispergators (32) 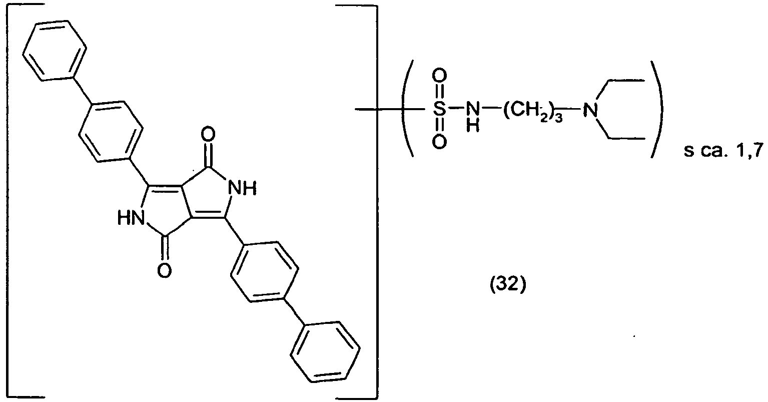 hergestellt in Anlehnung an EP-A-1 104 789, Beispiel 10a, 8,4 g Natriumchlorid und 2,4 g Diethylenglycol zugegeben und der erhaltene Knetteig für 12 h bei einer Temperatur von 80 °C geknetet.
Der Knetteig wird in 0,9 I 5 gew.-%iger Salzsäure für zwei Stunden gerührt und das Pigment anschließend abfiltriert.
Der Filterkuchen wird erneut für 1 h unter Rühren mit 0,9 I entsalztem Wasser behandelt. Nach der Filtration wird das Pigment mit Wasser salz- und säurefrei gewaschen und im Vakuum getrocknet.
Die erhaltene Pigmentzusammensetzung hat eine mittlere Teilchengröße d₅₀ = 29 nm und einen d₉₅-Wert von 43 nm mit einer Standardabweichung σ von 12 nm.
Länge zu Breiteverhältnis: 1.5:1.

### Beispiel 4:

Es wird eine Salzknetung analog zu Beispiel 3 durchgeführt, wobei jedoch 1,12 g des unsymmetrischen DPP-Pigments der Formel (29) eingesetzt werden.
Die erhaltene Pigmentzusammensetzung hat eine mittlere Teilchengröße d₅₀ = 30 nm und einen d₉₅-Wert von 50 nm mit einer Standardabweichung σ von 10 nm.
Länge zu Breiteverhältnis: 1.5:1

### Beispiel 5:

Analog zu Beispiel 3 wird ein homogenes Gemisch aus 1,4 g des Dispergators (33), 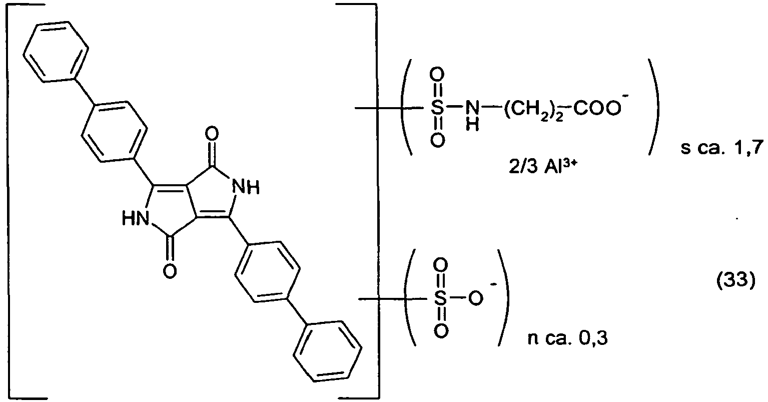 der in Anlehnung an das Beispiel 1a der EP-A-1 362 081 synthetisiert wurde, zusammen mit 8,4 g Natriumchlorid und 2,4 g Diethylenglycol in die Knetung eingesetzt. Man erhält eine rote Pigmentzusammensetzung, die sich durch eine mittlere Teilchengröße d₅₀ = 31 nm und einen d₉₅-Wert von 49 nm mit einer Standardabweichung σ von 13 nm auszeichnet.
Länge zu Breiteverhältnis: 1.5:1

### Beispiel 6:

Analog zu Beispiel 3 wird zu dem Knetteig ein homogenes Gemisch aus 1,4 g des Dispergators (34) zusammen mit 8,4 g Natriumchlorid und 2,4 g Diethylenglycol gegeben. Man erhält eine rote Pigmentzusammensetzung mit einer mittleren Teilchengröße d₅₀ = 27 nm und einem d₉₅-Wert von 42 nm mit einer Standardabweichung σ von 8 nm.
Länge zu Breiteverhältnis: 1.4:1

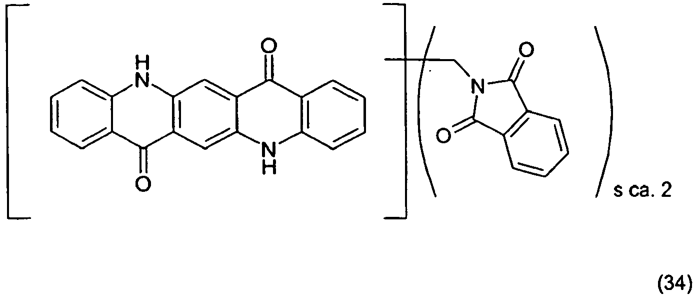

### Beispiel 7:

Analog zu Beispiel 3 wird zu dem Knetteig ein homogenes Gemisch aus 1,4 g des Dispergators (35), der in Anlehnung an das Beispiel 1 der DE-A-3 106 906 synthetisiert wurde, zusammen mit 8,4 g Natriumchlorid und 2,4 g Diethylenglycol gegeben. Man erhält eine rote Pigmentzusammensetzung mit einer mittleren Teilchengröße d₅₀ = 29 nm und einem d₉₅-Wert von 41 nm mit einer Standardabweichung σ von 8 nm.
Länge zu Breiteverhältnis: 1.3:1

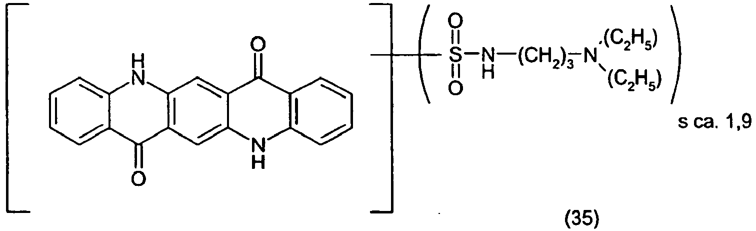

### Beispiel 8:

Analog zu Beispiel 3 wird zu dem Knetteig ein homogenes Gemisch aus 1,4 g des Pigmentdispergators (32) und 1,4 g des Dispergators (VIII) zusammen mit 8,4 g Natriumchlorid und 2,4 g Diethylenglycol gegeben. Der Knetteig wird in 0,9 l 5 gew.-%iger Salzsäure für zwei Stunden gerührt und das Pigment anschließend abfiltriert.

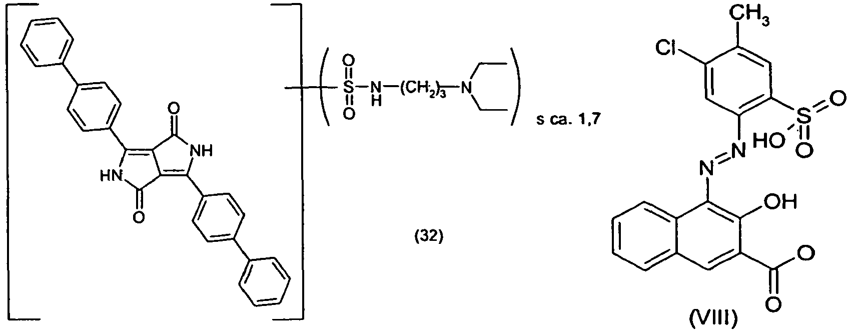

Der Filterkuchen wird erneut für 1 h unter Rühren mit 0,9 I entsalztem Wasser behandelt. Nach der Filtration wird das Pigment mit Wasser salz- und säurefrei gewaschen und im Vakuum getrocknet.
Die erhaltene rote Pigmentzusammensetzung hat eine mittlere Teilchengröße d₅₀ = 31 nm und einen d₉₅-Wert von 46 nm mit einer Standardabweichung σ von 12 nm.
Länge zu Breiteverhältnis: 1.5:1

### Beispiel 9:

Analog zu Beispiel 3 wird zu dem Knetteig ein homogenes Gemisch aus 1,4 g des Pigmentdispergators (32) und 1,4 g des Dispergators (IX) zusammen mit 8,4 g Natriumchlorid und 2,4 g Diethylenglycol gegeben. Man erhält eine rote Pigmentzusammensetzung, die sich durch eine mittlere Teilchengröße d₅₀ = 35 nm und einen d₉₅-Wert von 53 nm mit einer Standardabweichung σ von 13 nm auszeichnet.
Länge zu Breiteverhältnis: 1.4:1

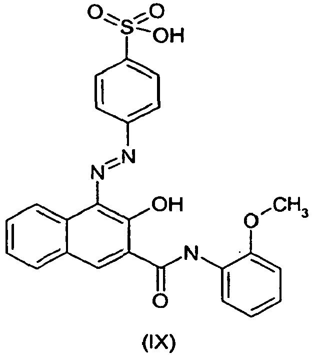

### Beispiel 10:

Analog zu Beispiel 3 wird zu dem Knetteig ein homogenes Gemisch aus 1,4 g des Pigmentdispergators (32) und 1,4 g des Dispergators (X) zusammen mit 8,4 g Natriumchlorid und 2,4 g Diethylenglycol gegeben. Man erhält eine rote Pigmentzusammensetzung, die sich durch eine mittlere Teilchengröße d₅₀ = 31 nm und einen d₉₅-Wert von 46 nm mit einer Standardabweichung σ von 10 nm auszeichnet.
Länge zu Breiteverhältnis: 1.5:1

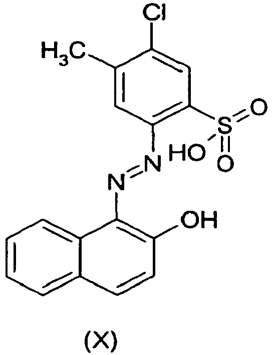

### Beispiel 11:

Analog zu Beispiel 3 wird zu dem Knetteig ein homogenes Gemisch aus 1,4 g des Pigmentdispergators (32) und 1,4 g des Dispergators (XI) zusammen mit 8,4 g Natriumchlorid und 2,4 g Diethylenglycol gegeben. Man erhält eine rote Pigmentzusammensetzung, die sich durch eine mittlere Teilchengröße d₅₀ = 32 nm und einen d₉₅-Wert von 55 nm mit einer Standardabweichung σ von 14 nm auszeichnet.
Länge zu Breiteverhältnis: 1.4:1

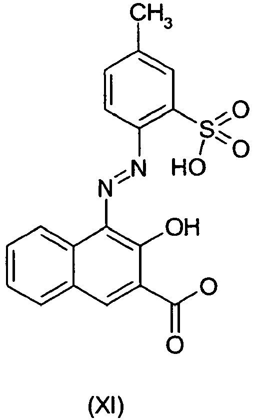

### Beispiel 12:

Analog zu Beispiel 3 wird zu dem Knetteig ein homogenes Gemisch aus 1,4 g des Pigmentdispergators (32) und 1,4 g des Dispergators (XII) zusammen mit 8,4 g Natriumchlorid und 2,4 g Diethylenglycol gegeben. Man erhält eine rote Pigmentzusammensetzung, die sich durch eine mittlere Teilchengröße d₅₀ = 28 nm und einen d₉₅-Wert von 46 nm mit einer Standardabweichung σ von 10 nm auszeichnet.
Länge zu Breiteverhältnis: 1.4:1

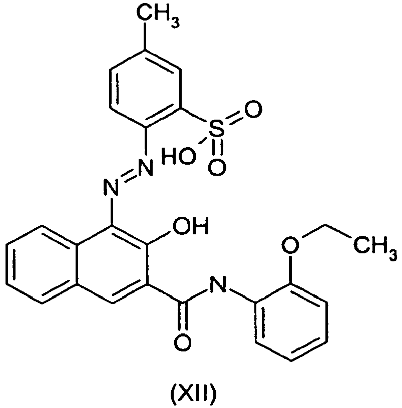

### Beispiel 13:

Analog zu Beispiel 3 wird zu dem Knetteig ein homogenes Gemisch aus 1,4 g des Pigmentdispergators (32) und 1,4 g des Dispergators (XIII) zusammen mit 8,4 g Natriumchlorid und 2,4 g Diethylenglycol gegeben. Man erhält eine rote Pigmentzusammensetzung, die sich durch eine mittlere Teilchengröße dso = 35 nm und einen d₉₅-Wert von 49 nm mit einer Standardabweichung σ von 9 nm auszeichnet.
Länge zu Breiteverhältnis: 1.4:1

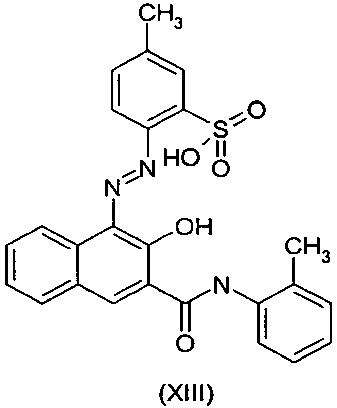

### Beispiel 14:

Analog zu Beispiel 3 wird zu dem Knetteig ein homogenes Gemisch aus 1,4 g des Pigmentdispergators (32) und 1,4 g des Dispergators (XIV) zusammen mit 8,4 g Natriumchlorid und 2,4 g Diethylenglycol gegeben.
Man erhält eine rote Pigmentzusammensetzung, die sich durch eine mittlere Teilchengröße d₅₀ = 30 nm und einen d₉₅-Wert von 53 nm mit einer Standardabweichung σ von 13 nm auszeichnet.
Länge zu Breiteverhältnis: 1.5:1

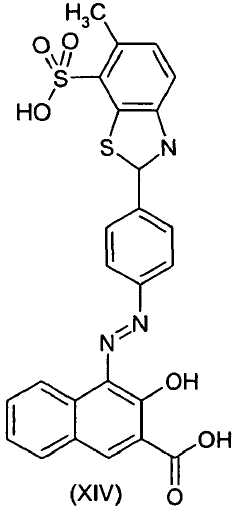

### Beispiel 15:

Analog zu Beispiel 3 wird zu dem Knetteig ein homogenes Gemisch aus 1,4 g des Pigmentdispergators (32) und 1,4 g des Dispergators (XV) zusammen mit 8,4 g Natriumchlorid und 2,4 g Diethylenglycol gegeben. Man erhält eine rote Pigmentzusammensetzung, die sich durch eine mittlere Teilchengröße d₅₀ = 31 nm und einen d₉₅-Wert von 40 nm mit einer Standardabweichung σ von 12 nm auszeichnet.
Länge zu Breiteverhältnis: 1.5:1

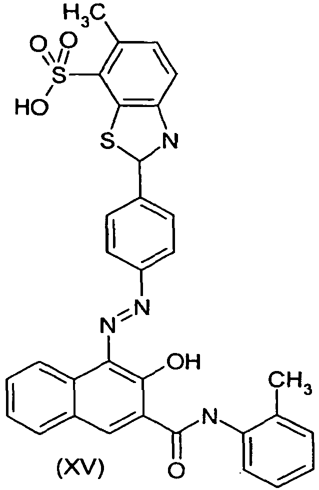

### Beispiel 16:

Analog zu Beispiel 7 wird zu dem Knetteig ein homogenes Gemisch aus 1,4 g des Dispergators (35), der in Anlehnung an das Beispiel 1 der DE-A-3 106 906 synthetisiert wurde und 1,9 g des Dispergators (IX) zusammen mit 8,4 g Natriumchlorid und 2,4 g Diethylenglycol gegeben.
Man erhält eine rote Pigmentzusammensetzung, die sich durch eine mittlere Teilchengröße d₅₀ = 32 nm und einen d₉₅-Wert von 50 nm mit einer Standardabweichung σ von 10 nm auszeichnet.
Länge zu Breiteverhältnis: 1.4:

### Beispiel 17:

Analog zu Beispiel 7 wird zu dem Knetteig ein homogenes Gemisch aus 0,7 g des Dispergators (35), der in Anlehnung an das Beispiel 1 der DE-A-3 106 906 synthetisiert wurde und 0,42 g des Dispergators (VIII) zusammen mit 8,4 g Natriumchlorid und 2,4 g Diethylenglycol gegeben.
Man erhält eine rote Pigmentzusammensetzung, die sich durch eine mittlere Teilchengröße d₅₀ = 31 nm und einen d₉₅-Wert von 45 nm mit einer Standardabweichung σ von 12 nm auszeichnet.
Länge zu Breiteverhältnis: 1.5:1

### Beispiel 18:

Analog zu Beispiel 3 werden 1,4 g der Verbindung (IX) als alleiniger Dispergator in die Knetung eingesetzt. Man erhält eine rote Pigmentzusammensetzung, die sich durch eine mittlere Teilchengröße d₅₀ = 38 nm und einen d₉₅-Wert von 52 nm mit einer Standardabweichung σ von 14 nm auszeichnet.
Länge zu Breiteverhältnis: 1.5:1

### Beispiel 19:

Analog zu Beispiel 3 werden 1,4 g der Verbindung (VIII) als alleiniger Dispergator in die Knetung eingesetzt. Man erhält eine rote Pigmentzusammensetzung, die sich durch eine mittlere Teilchengröße d₅₀ = 43 nm und einen d₉₅-Wert von 57 nm mit einer Standardabweichung σ von 15 nm auszeichnet.
Länge zu Breiteverhältnis: 1.5:1

### Beispiel 20:

Analog zu Beispiel 1 wird die Pigmentzusammensetzung ohne weitere Additive geknetet. Nach Ausrühren des Knetkuchens mit 5 gew.-%iger Salzsäure wird erneut mit 0.9 I entsalztem Wasser angeteigt und mit 1.4 g des Pigmentdispergators (32) und 1,4 g des Dispergators (IX) in wässriger Suspension für 1 h bei 50 °C verrührt. Nach Abkühlen wird filtriert und mit etwa 2 I entsalztem Wasser nachgewaschen. Das Pigment wird im Vakuum getrocknet und anschließend gemahlen. Man erhält eine rote Pigmentzusammensetzung, die sich durch eine mittlere Teilchengröße d₅₀ = 32 nm und einen d₉₅-Wert von 50 nm mit einer Standardabweichung σ von 12 nm auszeichnet.
Länge zu Breiteverhältnis: 1.5:1

### Vergleichsbeispiel:

Es wird eine Salzknetung durchgeführt, bei der P.R. 254 mit einer mittleren Teilchengröße von über 200 nm eingesetzt wird, das nach Beispiel 1 der EP-A-0 190 999 hergestellt wurde. Dafür werden 15 g des trockenen Pigments mit 90 g Natriumchlorid und 25 ml Diethylenglykol bei einer Temperatur von 80 °C für 12 h geknetet. Der Knetteig wird in 0,9 I 5 %iger Salzsäure für zwei Stunden gerührt und das Pigment anschließend abfiltriert.

Der Filterkuchen wird erneut für 1 h unter Rühren mit 0,9 I entsalztem Wasser behandelt. Nach der Filtration wird das Pigment mit Wasser salz- und säurefrei gewaschen und im Vakuum getrocknet.
Das erhaltene Pigment hat eine mittlere Teilchengröße d₅₀ = 70 nm und einen d₉₅-Wert von 114 nm mit einer Standardabweichung σ von 22 nm.
Länge zu Breiteverhältnis: 1.5:1

**Tabelle 1: Korngrößenverteilung und Standardabweichung**

| Probe | d₅₀ [nm] | d₉₅ [nm] | Standardabweichung σ [nm] |
|---|---|---|---|
| Beispiel 1 | 30 | 45 | 11 |
| Beispiel 2 | 28 | 42 | 8 |
| Beispiel 3 | 29 | 43 | 12 |
| Beispiel 4 | 30 | 50 | 10 |
| Beispiel 5 | 31 | 49 | 13 |
| Beispiel 6 | 27 | 42 | 8 |
| Beispiel 7 | 29 | 41 | 8 |
| Beispiel 8 | 31 | 46 | 12 |
| Beispiel 9 | 35 | 53 | 13 |
| Beispiel 10 | 31 | 46 | 10 |
| Beispiel 11 | 32 | 55 | 14 |
| Beispiel 12 | 28 | 46 | 10 |
| Beispiel 13 | 35 | 49 | 9 |
| Beispiel 14 | 30 | 53 | 13 |
| Beispiel 15 | 31 | 40 | 12 |
| Beispiel 16 | 32 | 50 | 10 |
| Beispiel 17 | 31 | 45 | 12 |
| Beispiel 18 | 38 | 52 | 14 |
| Beispiel 19 | 43 | 57 | 15 |
| Beispiel 20 | 32 | 50 | 12 |
| Vergleichsbeispiel | 70 | 114 | 22 |

### Anwendung in Colorfiltern:

7,6 g Pigment bzw. Pigmentzusammensetzung werden mit 1,8 g Solsperse 24000 (Avecia) und 42 g PGMEA versetzt. Nach Zugabe von 122 g Zirkonoxid-Perlen (0,5-0,7 mm) wird für zwei Stunden im Paint Shaker dispergiert. Zu der erhaltenen Millbase wird eine Mischung aus 7,2g Joncryl^{®} 611 (Styrol-Acrylatharz, Johnson Polymers) in 13,4 g PGMEA gegeben und erneut für 10 Minuten im Paintshaker dispergiert. Die Pigmentdispersion wird mit Hilfe eines Spincoaters (POLOS Wafer Spinner) auf Glasplatten (SCHOTT, Laser-geschnitten, 10 x 10 cm) aufgetragen und der Kontrastwert (Goniometer DMS 803, Spektrograph CCD-SPECT2) gemessen.
Zur Bestimmung der Hitzestabilität wird die Glasplatte anschließend für 1 h bei 250 °C erhitzt. Der Kontrastwert wird erneut vermessen und der Verlust im Vergleich zur nicht temperaturbehandelten Glasplatte in Prozent angegeben.

| Probe | Kontrastwert | Verlust beim Erhitzen (250 °C) |
|---|---|---|
| Beispiel 1 | 1355 | -13 % |
| Beispiel 2 | 1456 | -12 % |
| Beispiel 3 | 2339 | -4 % |
| Beispiel 4 | 2475 | -3 % |
| Beispiel 5 | 2351 | -5 % |
| Beispiel 6 | 2543 | -6 % |
| Beispiel 7 | 2444 | -5 % |
| Beispiel 8 | 2789 | -4 % |
| Beispiel 9 | 2715 | -3 % |
| Beispiel 10 | 2683 | -3 % |
| Beispiel 11 | 2520 | -4 % |
| Beispiel 12 | 2624 | -5 % |
| Beispiel 13 | 2535 | -4 % |
| Beispiel 14 | 2452 | -6 % |
| Beispiel 15 | 2687 | -3 % |
| Beispiel 16 | 2725 | -7 % |
| Beispiel 17 | 2578 | -8 % |
| Beispiel 18 | 2332 | -11 % |
| Beispiel 19 | 2085 | -10 % |
| Beispiel 20 | 2293 | -8 % |
| Vergleichsbeispiel | 285 | -28 % |

Die Pigmentzusammensetzungen aus Beispielen 1 bis 20 sind aufgrund ihres hohen Kontrastwertes für Colorfilteranwendungen geeignet.

## Patentansprüche

1. Binäre Pigmentzusammensetzung aus Verbindungen der Formel (I) und (II), **gekennzeichnet durch** eine mittlere Teilchengröße d₅₀ von 10 bis 60 nm, wobei weniger als 5 Volumen-% der Teilchen größer als 70 nm sind,
wobei das Massenverhältnis von Verbindung der Formel (I) zu Verbindung der Formel (II) 99,5 zu 0,5 bis 80 zu 20 ist, 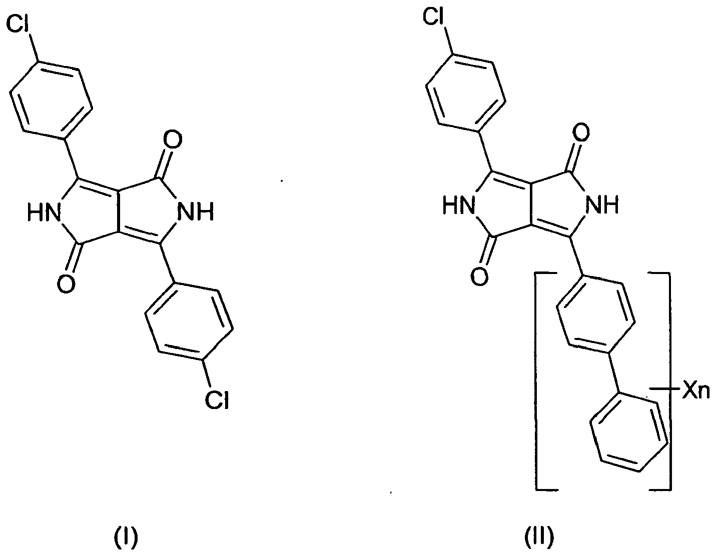 worin
n eine Zahl von 0 bis 4 darstellt; und
X OH, F, Cl, Br, CN, CF₃, Nitro, C₁-C₈-Alkyl, C₅-C₇-Cycloalkyl, C₂-C₈-Alkenyl, C₁-C₈-Alkoxy, Phenyl oder Benzyl ist.

2. Pigmentzusammensetzung nach Anspruch 1, **gekennzeichnet durch** eine mittlere Teilchengröße d₅₀ von 15 bis 50 nm.

3. Pigmentzusammensetzung nach Anspruch 1 oder 2, **dadurch gekennzeichnet, dass** n Null ist.

4. Pigmentzusammensetzung nach einem oder mehreren der Ansprüche 1 bis 3, **dadurch gekennzeichnet, dass** die Standardabweichung Sigma zwischen 5 und 30 nm ist.

5. Pigmentzusammensetzung nach einem oder mehreren der Ansprüche 1 bis 4, **dadurch gekennzeichnet, dass** das Länge- zu Breiteverhältnis der Primärpigmentteilchen zwischen 2:1 und 1:1 liegt.

6. Pigmentzusammensetzung nach einem oder mehreren der Ansprüche 1 bis 5, enthaltend ein oder mehrere Hilfsmittel aus der Gruppe der Tenside, Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren.

7. Pigmentzusammensetzung nach Anspruch 6, **dadurch gekennzeichnet, dass** das Dispergiermittel ein Pigmentdispergator aus der Gruppe der Verbindungen der Formel (4) und/oder der unverlackten, sulfogruppenhaltigen Monoazofarbstoffe ist, 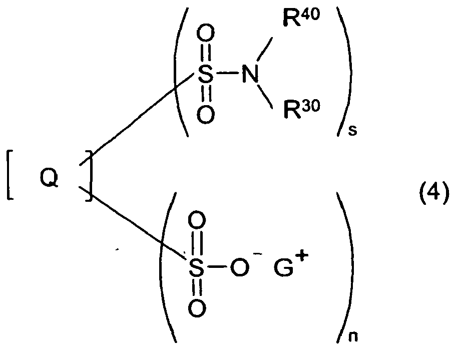 worin
Q ein Rest eines organischen Pigments aus der Gruppe der Perinon-, Chinacridon-, Chinacridonchinon-, Anthanthron-, Indanthron-, Dioxazin-, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
s eine Zahl von 1 bis 5 darstellt;
n eine Zahl von 0 bis 4 darstellt; wobei die Summe s + n einen Wert von 1 bis 5 hat, und s größer als n ist;
R³⁰ einen verzweigten oder unverzweigten, gesättigten oder ungesättigten, aliphatischen Kohlenwasserstoffrest mit 1 bis 20 C-Atomen, oder einen C₅-C₇-Cycloalkylrest, oder einen araliphatischen oder aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkyl-, Aromaten-, Araliphaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR⁵, CONR⁵R⁶, NR⁵R⁶, SO₃R⁵, SO₂-NR⁵R⁶, SO₃⁻E⁺ oder COO⁻E⁺ substituiert sein können, wobei R⁵ und R⁶ gleich oder verschieden sind und Wasserstoff, Phenyl oder C₁-C₆-Alkyl bedeuten;
R⁴⁰ Wasserstoff oder R³⁰ bedeutet;
E⁺, G⁺ unabhängig voneinander H⁺ oder das Äquivalent M^{p+}/m eines Metallkations M^{p+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 und p die Zahl 1, 2 oder 3 bedeutet;
oder ein substituiertes oder unsubstituiertes Ammoniumion bezeichnet.

8. Pigmentzusammensetzung nach Anspruch 7, enthaltend 0,1 bis 30 Gew.-%, bezogen auf die eingesetzte Mischung der Verbindungen der Formeln (I) und (II), an einem oder mehreren der Pigmentdispergatoren.

9. Pigmentzusammensetzung nach Anspruch 7 oder 8, **dadurch gekennzeichnet, dass** der unverlackte, sulfogruppenhaltige Monoazofarbstoff eine Verbindung der Formel (Va), (Vb), (VI) oder (VII) 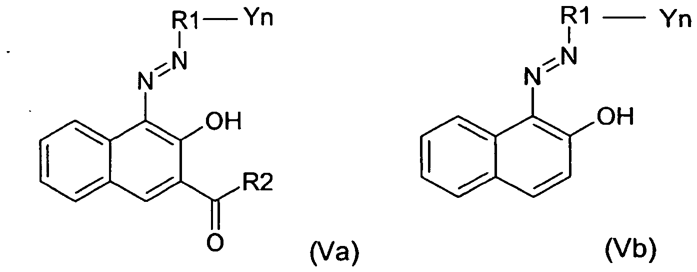 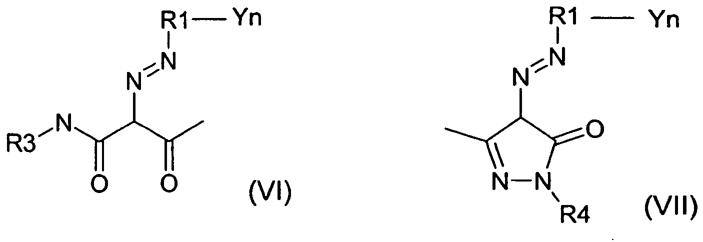 worin
R1 ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;
wobei die genannten Aromaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR5, CONR5R6, NR5R6, SO₃R5, SO₂-NR5R6 oder COO⁻E⁺ substituiert sein können, wobei R5 und R6 gleich oder verschieden sind und Wasserstoff, Phenyl oder C₁-C₆-Alkyl und E⁺ Wasserstoff, Lithium, Natrium, Kalium, Rubidium, Cäsium oder ein unsubstituiertes Ammoniumion bedeuten;
Y SO₃⁻ E⁺ oder Z-SO₃⁻E⁺, wobei Z C₁ - C₁₀-Alkylen oder Phenylen bedeutet;
n die Zahl 1, 2 oder 3;
R2 -OR⁸ oder -NHR⁸, wobei R⁸, H, C₁-C₆-Alkyl, Benzyl, ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;
wobei die genannten Aromaten- und Heteroaromaten-Reste jeweils durch 1, 2, 3 oder 4 Substituenten aus der Gruppe OH, C₁-C₆-Alkoxy, S-C₁-C₆-Alkyl, Halogen, wie F, Cl, Br, NHCONH₂, NHC(NH)NH₂, NHCO-C₁-C₆-Alkyl, C₁-C₆-Alkyl, Nitro, COOR5, CONR5R6, SO₃R5, SO₂-NR5R6, NR⁹R¹⁰, SO₃⁻E⁺ oder COO⁻E⁺ substituiert sein können, wobei R5 und R6 gleich oder verschieden sind und Wasserstoff, Phenyl oder C₁-C₆-Alkyl bedeuten; R⁹ und R¹⁰ gleich oder verschieden sind und Wasserstoff, Phenyl oder C₁-C₆-Alkyl bedeuten;
R3 und R4 jeweils ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;
wobei die genannten Aromaten- und Heteroaromaten-Reste jeweils durch 1, 2, 3 oder 4 Substituenten aus der Gruppe OH, C₁-C₆-Alkoxy, S-C₁-C₆-Alkyl, Halogen, wie F, Cl, Br, NHCONH₂, NHC(NH)NH₂, NHCO-C₁-C₆-Alkyl, C₁-C₆-Alkyl, Nitro, COOR5, CONR5R6, SO₃R5, SO₂-NR5R6, NR⁹R¹⁰, SO₃-E⁺ oder COO⁻E⁺ substituiert sein können, wobei R5 und R6 gleich oder verschieden sind und Wasserstoff, Phenyl oder C₁-C₆-Alkyl bedeuten; R⁹ und R¹⁰ gleich oder verschieden sind und Wasserstoff, Phenyl oder C₁-C₆-Alkyl bedeuten.

10. Pigmentzusammensetzung nach Anspruch 9, **dadurch gekennzeichnet, dass** der Rest R2 OH oder O-C₁-C₆-Alkyl bedeutet.

11. Pigmentzusammensetzung nach Anspruch 9, **dadurch gekennzeichnet, dass** der Rest -CO-R2 eine Amidgruppe mit R2 gleich NH₂, 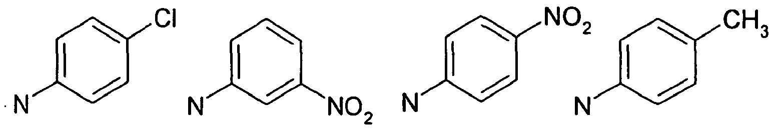 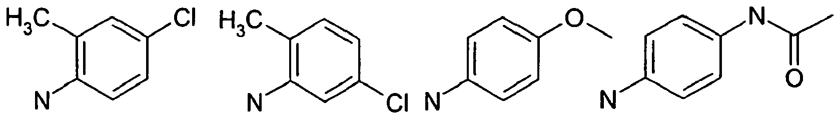 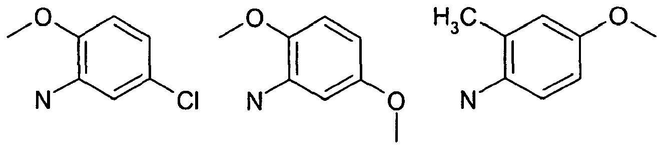 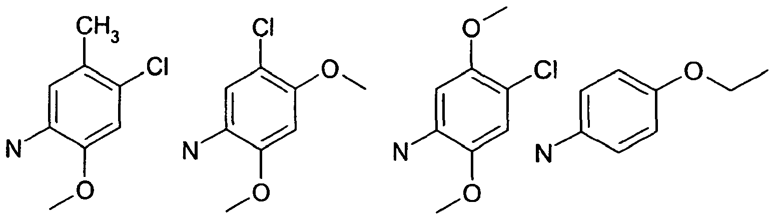 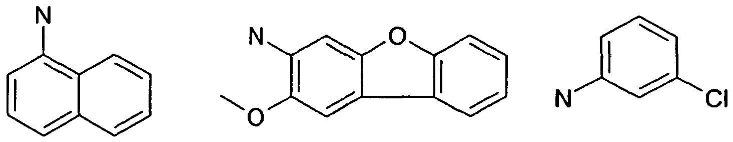 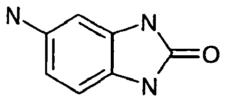 bedeutet, wobei in den vorstehenden Formeln die Bindung zur Carbonylgruppe über die freie Aminogruppe N - des Aromatenringes erfolgt.

12. Verfahren zur Herstellung einer Pigmentzusammensetzung nach einem oder mehreren der Ansprüche 1 bis 5, durch Mischen von P.R. 254 mit der Verbindung der Formel (II) vor und / oder während einer Feinverteilung, vorzugsweise einer Salzknetung oder Perlmahlung, besonders bevorzugt einer Salzknetung.

13. Verfahren zur Herstellung einer Pigmentzusammensetzung nach einem oder mehreren der Ansprüche 7 bis 11, **dadurch gekennzeichnet, dass** man eine Mischung der Verbindungen der Formeln (I) und (II) vor, während oder nach einer Feinverteilung oder Finishbehandlung mit einem oder mehreren der Pigmentdispergatoren der Formeln (4) bzw. der unverlackten, sulfogruppenhaltigen Monoazofarbstoffe versetzt.

14. Verwendung einer Pigmentzusammensetzung nach einem oder mehreren der Ansprüche 1 bis 11 zum Pigmentieren von Kunststoffen, Harzen, Lacken, Anstrichfarben, elektrophotographischen Tonern und Entwicklern, Farbfiltern sowie von Tinten, insbesondere Inkjet-Tinten, und Druckfarben.

15. Farbfilter, enthaltend eine färberisch wirksame Menge einer Pigmentzusammensetzung nach einem oder mehreren der Ansprüche 1 bis 11.

## Claims

1. A binary pigment composition of compounds of the formulae (I) and (II), **characterized by** a median particle size d₅₀ of 10 to 60 nm, less than 5% by volume of the particles being greater than 70 nm,
the mass ratio of compound of the formula (I) to compound of the formula (II) being 99.5:0.5 to 80:20, 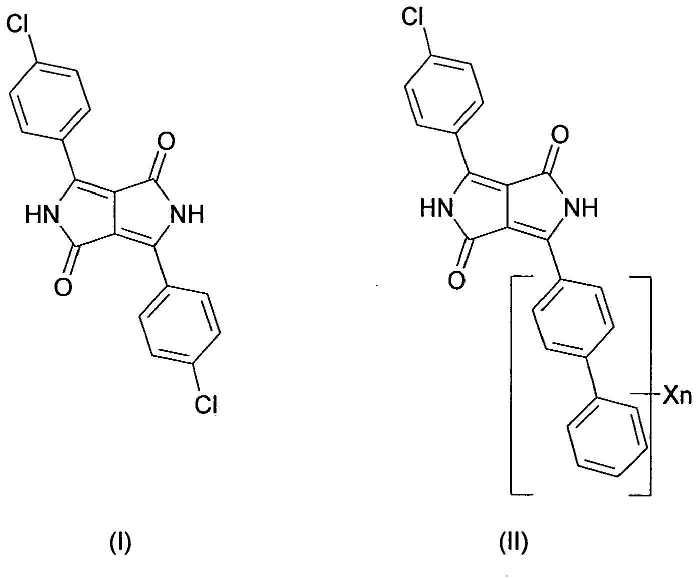 where
n is a number from 0 to 4; and
X is OH, F, Cl, Br, CN, CF₃, nitro, C₁-C₈-alkyl, C₅-C₇-cycloalkyl, C₂-C₈-alkenyl, C₁-C₈-alkoxy, phenyl or benzyl.

2. The pigment composition as claimed in claim 1, **characterized by** a median particle size d₅₀ of 15 to 50 nm.

3. The pigment composition as claimed in claim 1 or 2, wherein n is zero.

4. The pigment composition as claimed in one or more of claims 1 to 3, wherein the standard deviation sigma is between 5 and 30 nm.

5. The pigment composition as claimed in one or more of claims 1 to 4, wherein the length to width ratio of the primary pigment particles is between 2:1 and 1:1.

6. The pigment composition as claimed in one or more of claims 1 to 5, containing one or more auxiliaries from the group of the surfactants, dispersants, fillers, standardizers, resins, waxes, defoamers, dustproofers, extenders, antistats, preservatives, dryness retarders, wetters, antioxidants, UV absorbers and light stabilizers.

7. The pigment composition as claimed in claim 6, wherein the dispersant is a pigment dispersant from the group of the compounds of the formula (4) and/or of the unlaked sulfo-containing monoazo dyes, 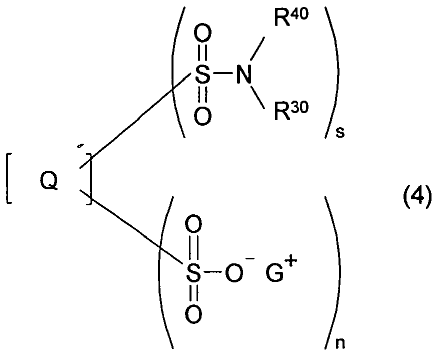 where
Q is a residue of an organic pigment from the group of the perinone pigments, quinacridone pigments, quinacridonequinone pigments, anthanthrone pigments, indanthrone pigments, dioxazine pigments, diketopyrrolopyrrole pigments, indigo pigments, thioindigo pigments, thiazineindigo pigments, isoindoline pigments, isoindolinone pigments, pyranthrone pigments, isoviolanthrone pigments, flavanthrone pigments or anthrapyrimidine pigments;
s is a number from 1 to 5;
n is a number from 0 to 4; the sum total of s and n being 1 to 5, and s being greater than n;
R³⁰ is a branched or unbranched, saturated or unsaturated, aliphatic hydrocarbyl radical having 1 to 20 carbon atoms, or is a C₅-C₇-cycloalkyl radical, or is an araliphatic or aromatic radical having 1, 2 or 3 aromatic rings, the rings possibly being fused or linked by a bond, or is a heterocyclic radical having 1, 2 or 3 rings containing 1, 2, 3 or 4 heteroatoms from the group consisting of O, N and S, or a combination thereof; where the hydrocarbyl, cycloalkyl, aromatic, araliphatic and heteroaromatic radicals mentioned may be substituted by 1, 2, 3 or 4 substituents from the group consisting of OH, CN, F, Cl, Br, NO₂, CF₃, C₁-C₆-alkoxy, S-C₁-C₆-alkyl, NHCONH₂, NHC(NH)NH2, NHCO-C₁-C₆-alkyl, C₁-C₆-alkyl, COOR⁵, CONR⁵R⁶, NR⁵R⁶, SO₃R⁵, SO₂-NR⁵R⁶, SO₃⁻E⁺ and COO⁻E⁺, where R⁵ and R⁶ are the same or different and are each hydrogen, phenyl or C₁-C₆-alkyl;
R⁴⁰ is hydrogen or R³⁰;
E⁺, G⁺ are independently H⁺ or the equivalent M^{p+}/m of a metal cation M^{p+} from the 1st to 5th main group or from the 1st or 2nd or 4th to 8th transition group of the periodic table, where m is one of the numbers 1, 2 or 3 and p is 1, 2 or 3; or a substituted or unsubstituted ammonium ion.

8. The pigment composition as claimed in claim 7, containing 0.1 to 30% by weight of one or more of the pigment dispersants based on the mixture used of the compounds of the formulae (I) and (II).

9. The pigment composition as claimed in claim 7 or 8, wherein the unlaked sulfo-containing monoazo dye is a compound of the formula (Va), (Vb), (VI) or (VII) 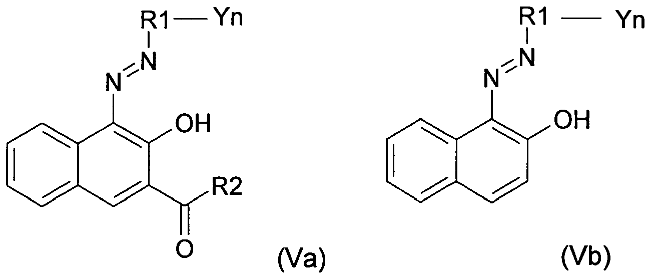 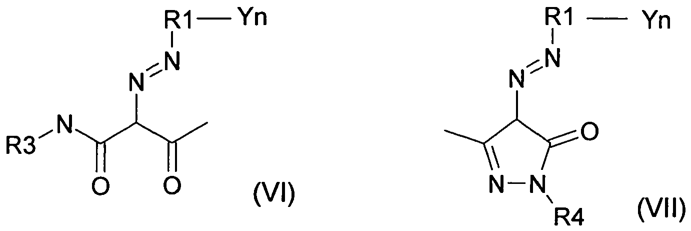
R1 is an aromatic radical having 1, 2 or 3 aromatic rings, the rings possibly being fused or linked by a bond, or is a heterocyclic radical having 1, 2 or 3 rings containing 1, 2, 3 or 4 heteroatoms from the group consisting of O, N and S; or a combination thereof;
where the aromatic and heteroaromatic radicals mentioned may be substituted by 1, 2, 3 or 4 substituents from the group consisting of OH, CN, F, Cl, Br, NO₂, CF₃, C₁-C₆-alkoxy, S-C₁-C₆-alkyl, NHCONH₂, NHC(NH)NH₂, NHCO-C₁-C₆-alkyl, C₁-C₆-alkyl, COOR5, CONR5R6, NR5R6, SO₃R5, SO₂-NR5R6 and COO⁻E⁺, where R5 and R6 are the same or different and are each hydrogen, phenyl or C₁-C₆-alkyl and E⁺ is hydrogen, lithium, sodium, potassium, rubidium, cesium or an unsubstituted ammonium ion;
Y is SO₃⁻ E⁺ or Z-SO₃⁻ E⁺, where Z is C₁-C₁₀-alkylene or phenylene;
n is a number from 1, 2 or 3;
R2 is -OR⁸ or -NHR⁸, where R⁸ is H, C₁-C₆-alkyl, benzyl, an aromatic radical having 1, 2 or 3 aromatic rings, the rings possibly being fused or linked by a bond, or is a heterocyclic radical having 1, 2 or 3 rings containing 1, 2, 3 or 4 heteroatoms from the group consisting of O, N and S; or a combination thereof;
where the aromatic and heteroaromatic radicals mentioned may each be substituted by 1, 2, 3 or 4 substituents from the group consisting of OH, C₁-C₆-alkoxy, S-C₁-C₆-alkyl, halogen, such as F, Cl, Br, NHCONH₂, NHC(NH)NH₂, NHCO-C₁-C₆-alkyl, C₁-C₆-alkyl, nitro, COOR5, CONR5R6, SO₃R5, SO₂-NR5R6, NR⁹R¹⁰, SO₃⁻E⁺ and COO⁻E⁺, where R5 and R6 are the same or different and are each hydrogen, phenyl or C₁-C₆-alkyl; R⁹ and R¹⁰ are the same or different and are each hydrogen, phenyl or C₁-C₆-alkyl;
R3 and R4 are each an aromatic radical having 1, 2 or 3 aromatic rings, the rings possibly being fused or linked by a bond, or a heterocyclic radical having 1, 2 or 3 rings containing 1, 2, 3 or 4 heteratoms from the group consisting of O, N and S; or a combination thereof;
where the aromatic and heteroaromatic radicals mentioned may each be substituted by 1, 2, 3 or 4 substituents from the group consisting of OH, C₁-C₆-alkoxy, S-C₁-C₆-alkyl, halogen, such as F, Cl, Br, NHCONH₂, NHC (NH) NH₂, NHCO-C₁-C₆-alkyl, C₁-C₆-alkyl, nitro, COOR5, CONR5R6, SO₃R5, SO₂-NR5R6, NR⁹R¹⁰, SO₃⁻E⁺ and COO⁻E⁺, where R5 and R6 are the same or different and are each hydrogen, phenyl or C₁-C₆-alkyl; R⁹ and R¹⁰ are the same or different and are each hydrogen, phenyl or C₁-C₆-alkyl.

10. The pigment composition as claimed in claim 9, wherein the R2 radical is OH or O-C₁-C₆-alkyl.

11. The pigment composition as claimed in claim 9, wherein the -CO-R2 radical is an amide group where R2 is NH₂, 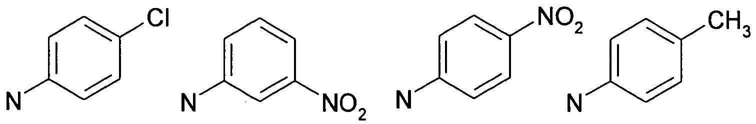 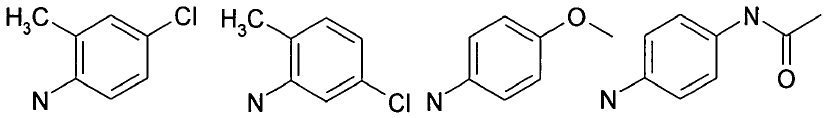 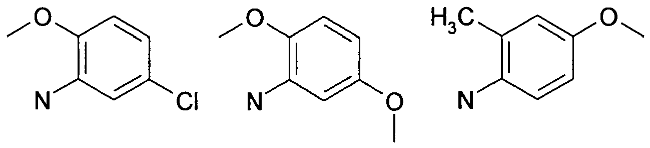 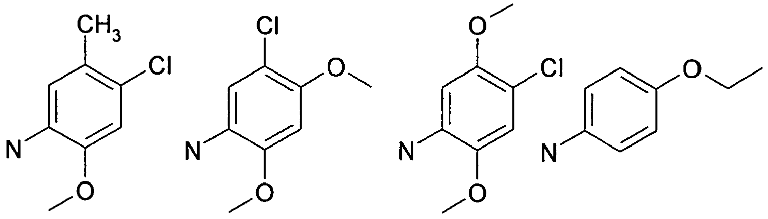 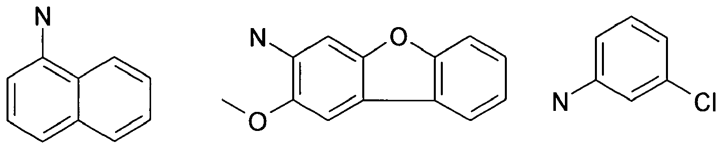 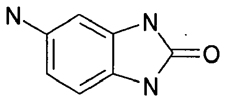 where the bond to the carbonyl group in the above formulae is via the free amino group N- of the aromatic ring.

12. A process for producing a pigment composition as claimed in one or more of claims 1 to 5, by mixing P.R. 254 with the compound of the formula (II) before and/or during a conversion into a fine state of subdivision, preferably a salt kneading or beadmilling, more preferably a salt kneading.

13. A process for producing a pigment composition as claimed in one or more of claims 7 to 11, which comprises a mixture of the compounds of the formulae (I) and (II) being admixed with one or more of the pigment dispersants of the formula (4) and/or of the unlaked sulfo-containing monoazo dyes before, during or after a conversion into a fine state of subdivision or a finishing treatment.

14. The use of a pigment composition as claimed in one or more of claims 1 to 11 for pigmentation of plastics, resins, coatings, paints, electrophotographic toners and developers, color filters and also of liquid inks, in particular inkjet inks, and printing inks.

15. A color filter comprising a coloristically effective amount of a pigment composition as claimed in one or more of claims 1 to 11.

## Revendications

1. Composition pigmentaire binaire de composés de formule (I) et (II), **caractérisée par** une taille de particule moyenne d₅₀ de 10 à 60 nm, moins de 5 % en volume des particules étant supérieures à 70 nm, le rapport en masse entre le composé de formule (I) et le composé de formule (II) étant de 99,5 sur 0,5 à 80 sur 20, 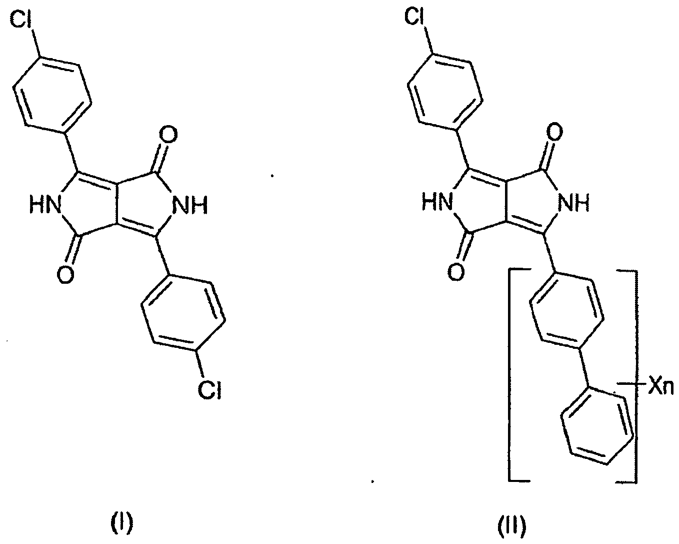 dans lesquelles
n représente un nombre de 0 à 4 ; et
X est OH, F, CI, Br, CN, CF₃, nitro, alkyle en C₁-C₈, cycloalkyle en C₅-C₇, alcényle en C₂-C₈, alcoxy en C₁-C₈, phényle ou benzyle.

2. Composition pigmentaire selon la revendication 1, **caractérisée par** une taille de particule moyenne d₅₀ de 15 à 50 nm.

3. Composition pigmentaire selon la revendication 1 ou 2, **caractérisée en ce que** n vaut zéro.

4. Composition pigmentaire selon une ou plusieurs des revendications 1 à 3, **caractérisée en ce que** l'écart-type sigma est compris entre 5 et 30 nm.

5. Composition pigmentaire selon une ou plusieurs des revendications 1 à 4, **caractérisée en ce que** le rapport longueur sur largeur des particules de pigment primaires est compris entre 2:1 et 1:1.

6. Composition pigmentaire selon une ou plusieurs des revendications 1 à 5, contenant un ou plusieurs adjuvants du groupe des tensioactifs, agents de dispersion, charges, agents de suspension, résines, cires, agents anti-mousse, agents anti-poussière, extendeurs, antistatiques, conservateurs, retardateurs de séchage, agents mouillants, antioxydants, absorbeurs UV et photostabilisateurs.

7. Composition pigmentaire selon la revendication 6, **caractérisée en ce que** l'agent de dispersion est un dispersant de pigments du groupe des composés de formule (4) et/ou des colorants monoazoïques non laqués contenant des groupes sulfo, 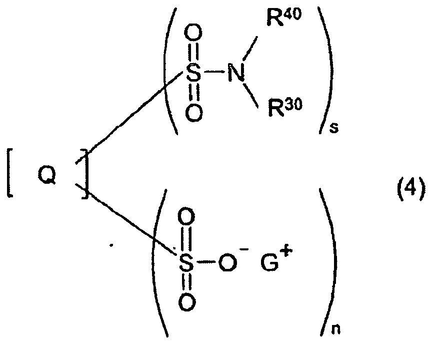 dans laquelle
Q est un radical d'un pigment organique du groupe des pigments périnone, quinacridone, quinacridone-quinone, anthanthrone, indanthrone, dioxazine, dicétopyrrolopyrrole, indigo, thioindigo, thiazine-indigo, isoindoline, isoindolinone, pyranthrone, isoviolanthrone, flavanthrone ou anthrapyrimidine ;
s représente un nombre de 1 à 5 ;
n représente un nombre de 0 à 4 ; la somme s + n ayant une valeur de 1 à 5, et s étant supérieur à n ;
R³⁰ signifie un radical hydrocarboné aliphatique ramifié ou non ramifié, saturé ou insaturé, de 1 à 20 atomes C, ou un radical cycloalkyle en C₅-C₇, ou un radical araliphatique ou aromatique de 1, 2 ou 3 cycles aromatiques, les cycles pouvant être condensés ou reliés par une liaison, ou un radical hétérocyclique de 1, 2 ou 3 cycles, contenant 1, 2, 3 ou 4 hétéroatomes du groupe O, N et S, ou une de leurs combinaisons ; les radicaux hydrocarbonés, cycloalkyles, aromatiques, araliphatiques et hétéroaromatiques mentionnés pouvant être substitués par 1, 2, 3 ou 4 substituants du groupe OH, CN, F, CI, Br, NO₂, CF₃, alcoxy en C₁-C₆, S-alkyle en C₁-C₆, NHCONH₂, NHC(NH)NH₂, NHCO-alkyle en C₁-C₆, alkyle en C₁-C₆, COOR⁵, CONR⁵R⁶, NR⁵R⁶, SO₃R⁵, SO₂-NR⁵R⁶, SO₃⁻E⁺ ou COO⁻ E⁺, R⁵ et R⁶ étant identiques ou différents et signifiant hydrogène, phényle ou alkyle en C₁-C₆ ;
R⁴⁰ signifie hydrogène ou R³⁰ ;
E⁺, G⁺ représentent indépendamment l'un de l'autre H⁺ ou l'équivalent M^{p+}/m d'un cation métallique M^{p+} du groupe principal 1 à 5 ou du groupe de transition 1 ou 2 ou 4 à 8 du tableau périodique des éléments chimiques, m signifiant un des nombres 1, 2 ou 3 et p le nombre 1, 2 ou 3 ;
ou un ion ammonium substitué ou non substitué.

8. Composition pigmentaire selon la revendication 7, contenant 0,1 à 30 % en poids, par rapport au mélange utilisé des composés de formules (I) et (II), d'un ou de plusieurs des dispersants de pigments.

9. Composition pigmentaire selon la revendication 7 ou 8, **caractérisée en ce que** le colorant monoazoïque non laqué contenant des groupes sulfo est un composé de formule (Va), (Vb), (VI) ou (VII) 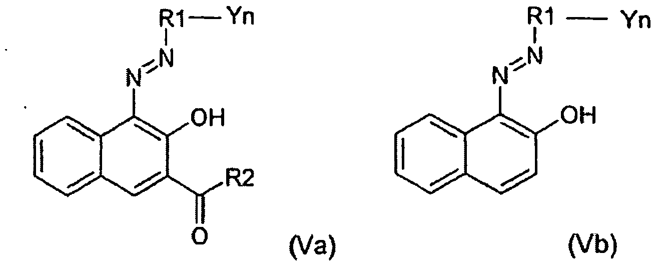 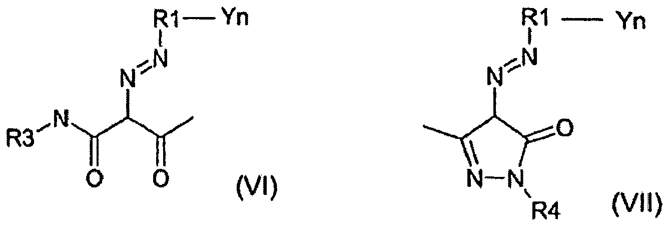 dans lesquelles
R1 signifie un radical aromatique de 1, 2 ou 3 cycles aromatiques, les cycles pouvant être condensés ou reliés par une liaison, ou un radical hétérocyclique de 1, 2 ou 3 cycles, contenant 1, 2, 3 ou 4 hétéroatomes du groupe O, N et S ; ou une de leurs combinaisons ;
les radicaux aromatiques et hétéroaromatiques mentionnés pouvant être substitués par 1, 2, 3 ou 4 substituants du groupe OH, CN, F, CI, Br, NO₂, CF₃, alcoxy en C₁-C₆, S-alkyle en C₁-C₆, NHCONH₂, NHC(NH)NH₂, NHCO-alkyle en C₁-C₆, alkyle en C₁-C₆, COOR5, CONR5R6, NR5R6, SO₃R5, SO₂-NR5R6 ou COO-E⁺, R5 et R6 étant identiques ou différents et signifiant hydrogène, phényle ou alkyle en C₁-C₆, et E⁺ signifiant hydrogène, lithium, sodium, potassium, rubidium, césium ou un ion ammonium non substitué ;
Y signifie SO₃-E⁺ ou Z-SO₃⁻E⁺, Z signifiant alkylène en C₁-C₁₀ ou phénylène ;
n signifie le nombre 1, 2 ou 3 ;
R2 signifie -OR⁸ ou -NHR⁸;
R⁸ signifiant H, alkyle en C₁-C₆, benzyle, un radical aromatique de 1, 2 ou 3 cycles aromatiques, les cycles pouvant être condensés ou reliés par une liaison, ou un radical hétérocyclique de 1, 2 ou 3 cycles, contenant 1, 2, 3 ou 4 hétéroatomes du groupe O, N et S ; ou une de leurs combinaisons ;
les radicaux aromatiques et hétéroaromatiques mentionnés pouvant à chaque fois être substitués par 1, 2, 3 ou 4 substituants du groupe OH, alcoxy en C₁-C₆, S-alkyle en C₁-C₆, halogène, tel que F, CI, Br, NHCONH₂, NHC(NH)NH₂, NHCO-alkyle en C₁-C₆, alkyle en C₁-C₆, nitro, COOR5, CONR5R6, SO₃R5, SO₂-NR5R6, NR⁹R¹⁰, SO₃⁻E⁺ ou COO⁻E⁺, R5 et R6 étant identiques ou différents et signifiant hydrogène, phényle ou alkyle en C₁-C₆ R⁹ et R¹⁰ étant identiques ou différents et signifiant hydrogène, phényle ou alkyle en C₁-C₆;
R3 et R4 signifient chacun un radical aromatique de 1, 2 ou 3 cycles aromatiques, les cycles pouvant être condensés ou reliés par une liaison, ou un radical hétérocyclique de 1, 2 ou 3 cycles, contenant 1, 2, 3 ou 4 hétéroatomes du groupe O, N et S ; ou une de leurs combinaisons ;
les radicaux aromatiques et hétéroaromatiques mentionnés pouvant à chaque fois être substitués par 1, 2, 3 ou 4 substituants du groupe OH, alcoxy en C₁-C₆, S-alkyle en C₁-C₆, halogène, tel que F, Cl, Br, NHCONH₂, NHC(NH)NH₂, NHCO-alkyle en C₁-C₆, alkyle en C₁-C₆, nitro, COOR5, CONR5R6, SO₃R5, SO₂-NR5R6, NR⁹R¹⁰, SO₃⁻E⁺ ou COO⁻E⁺, R5 et R6 étant identiques ou différents et signifiant hydrogène, phényle ou alkyle en C₁-C₆ ; R⁹ et R¹⁰ étant identiques ou différents et signifiant hydrogène, phényle ou alkyle en C₁-C₆.

10. Composition pigmentaire selon la revendication 9, **caractérisée en ce que** le radical R2 signifie OH ou O-alkyle en C₁-C₆.

11. Composition pigmentaire selon la revendication 9, **caractérisée en ce que** le radical -CO-R2 signifie un groupe amide avec R2 représentant NH₂, 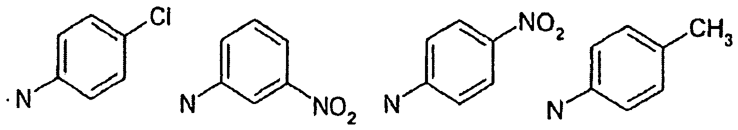 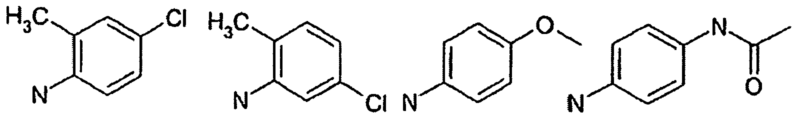 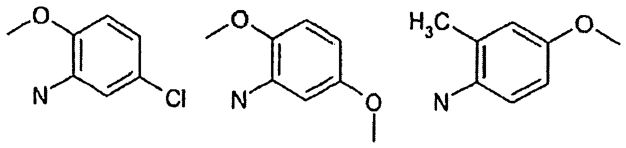 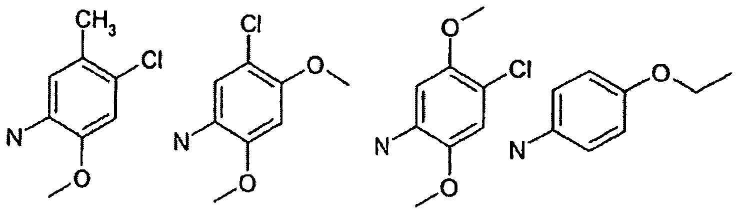 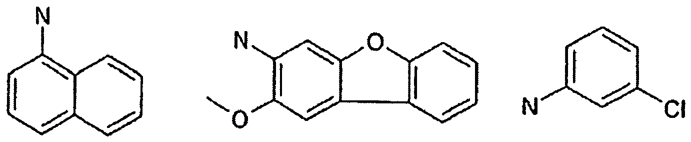 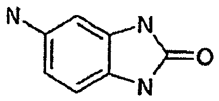 la liaison au groupe carbonyle dans les formules ci-dessus ayant lieu par le groupe amino libre N- du cycle aromatique.

12. Procédé de fabrication d'une composition pigmentaire selon une ou plusieurs des revendications 1 à 5, par mélange de P.R. 254 avec le composé de formule (II) avant et/ou pendant une dispersion, de préférence un malaxage avec un sel ou un broyage avec des perles, de manière particulièrement préférée un malaxage avec un sel.

13. Procédé de fabrication d'une composition pigmentaire selon une ou plusieurs des revendications 7 à 11, **caractérisé en ce qu'**un mélange des composés de formules (I) et (II) est mélangé avant, pendant ou après une dispersion ou un traitement de finition avec un ou plusieurs des dispersants de pigments de formule (4) ou des colorants monoazoïques non laqués contenant des groupes sulfo.

14. Utilisation d'une composition pigmentaire selon une ou plusieurs des revendications 1 à 11 pour la pigmentation de plastiques, de résines, de laques, de peintures, de toners et de révélateurs électrophotographiques, de filtres colorés, ainsi que d'encres, notamment d'encres jet d'encre, et d'encres d'impression.

15. Filtre coloré, contenant une quantité efficace pour la coloration d'une composition pigmentaire selon une ou plusieurs des revendications 1 à 11.
